(19) Europäisches Patentamt
European Patent Office
Office européen des brevets

(11) **EP 4 529 066 A1**

(12) **EUROPEAN PATENT APPLICATION**
published in accordance with Art. 153(4) EPC

(43) Date of publication:
**26.03.2025 Bulletin 2025/13**

(21) Application number: **23818970.8**

(22) Date of filing: **29.05.2023**

(51) International Patent Classification (IPC):
*H04L 5/00* *(2006.01)*

(52) Cooperative Patent Classification (CPC):
**H04L 5/00; H04L 25/03; H04W 24/02**

(86) International application number:
**PCT/CN2023/096929**

(87) International publication number:
**WO 2023/236805 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.06.2022 CN 202210654367**

(71) Applicant: **Huawei Technologies Co., Ltd.**
**Shenzhen, Guangdong 518129 (CN)**

(72) Inventors:
• **QIAN, Bin**
**Shenzhen, Guangdong 518129 (CN)**

• **ZHOU, Zhengchun**
**Chengdu, Sichuan 611756 (CN)**
• **LIU, Chenchen**
**Shenzhen, Guangdong 518129 (CN)**
• **YANG, Yang**
**Chengdu, Sichuan 611756 (CN)**
• **YANG, Xun**
**Shenzhen, Guangdong 518129 (CN)**
• **TANG, Xiaohu**
**Chengdu, Sichuan 611756 (CN)**

(74) Representative: **Epping - Hermann - Fischer**
**Patentanwaltsgesellschaft mbH**
**Schloßschmidstraße 5**
**80639 München (DE)**

(54) **INFORMATION INTERACTION METHOD AND RELATED APPARATUS**

(57) This application relates to an information interaction method and a related apparatus. The method includes: sending, by a communication apparatus, configuration information. The configuration information includes a quantity of cyclic shift positions that corresponds to each device, the quantity of cyclic shift positions is used to cyclically shift a perfect sequence, and quantities that are of cyclic shift positions and that correspond to devices used for completing different services are different. Based on embodiments of this application, anti-interference performance of a UWB system may be improved. This application is applied to a UWB-based wireless personal local area network system, a sensing system, and the like, including 802.15 series protocols, such as an 802.15.4a protocol, an 802.15.4z protocol, or an 802.15.4ab protocol. This application is further applied to a wireless local area network system that can support a next-generation Wi-Fi protocol of 802.11ax, such as 802.11be, Wi-Fi 7, or EHT, and 802.11 series protocols, such as a next generation of 802.11be or Wi-Fi 8.

FIG. 8

# EP 4 529 066 A1

## Description

This application claims priority to Chinese Patent Application No. 202210654367.X, filed with the China National Intellectual Property Administration on June 10, 2022 and entitled "INFORMATION INTERACTION METHOD AND RELATED APPARATUS", which is incorporated herein by reference in its entirety.

## TECHNICAL FIELD

This application relates to the field of communication technologies, and in particular, to an information interaction method and a related apparatus.

## BACKGROUND

As ultra-wideband (ultra-wideband, UWB) enters a civilian field, ultra-wideband (UWB) wireless communication has become one of physical layer technologies for short-distance and high-speed wireless networks. An ultra-wideband (UWB) technology is a wireless carrier communication technology that can transmit data, for example, by using nanosecond non-sinusoidal wave narrow pulses, and therefore, occupies a very wide spectrum range. Due to narrow pulses and low radiation spectrum density, the UWB has advantages of strong multipath resolution power, low power consumption, high confidentiality, and the like, and is mainly applied to sensing and ranging scenarios.

The Institute of Electrical and Electronics Engineers (Institute of Electrical and Electronics Engineers, IEEE) has incorporated the UWB technology into IEEE 802 series wireless standards of the Institute of Electrical and Electronics Engineers and has released a high-speed wireless personal area network (wireless personal area network, WPAN) standard IEEE 802.15.4a based on the UWB technology, and an evolved release IEEE 802.15.4z of the IEEE 802.15.4a. A next-generation UWB wireless personal area network (WPAN) standard 802.15.4ab is under discussion. A physical layer protocol data unit (physical layer protocol data unit, PPDU) defined in 802.15.4a and 802.15.4z includes a synchronization (synchronization, SYNC) field, and the SYNC field includes a plurality of repeated symbols, which are generated by a preamble sequence. For a specific generation manner, refer to an existing standard. Details are not provided herein. A preamble sequence in 802.15.4a and 802.15.4z is a ternary sequence (also referred to as an Ipatov sequence) including three types of elements {-1, 0, 1}, and has a length 31, 91, or 127. For specific content of preamble sequences with different lengths, refer to the 802.15.4a and 802.15.4z standards. Details are not provided herein.

Currently, a preamble sequence that is defined in 802.15.4a and 802.15.4z and that is used by a UWB system has poor anti-interference performance.

## SUMMARY

Embodiments of this application provide an information interaction method and a related apparatus, to improve anti-interference performance of a UWB system.

The following describes this application from different aspects. It should be understood that the implementations and beneficial effects of the following different aspects may be mutually referenced.

According to a first aspect, this application provides an information interaction method, applied to a UWB system. The method includes: A communication apparatus generates configuration information and sends the configuration information in a form of broadcasting. The configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The sequence configuration information is used to determine a preamble sequence. It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

It may be understood that the communication apparatus may be a coordinator (coordinator) in the UWB system.

The coordinator (coordinator) in this application configures different quantities of cyclic shift positions for the devices used for completing different services. The quantity of cyclic shift positions is used to cyclically shift the sequence in the sequence set, and the periodic auto-correlation side lobe amplitude of any sequence in the sequence set is 0, so that interference between at least some communication apparatuses due to a cross-correlation side lobe is relatively small, thereby improving an anti-interference capability of the UWB system.

According to a second aspect, this application provides an information interaction method, applied to a UWB system. The method includes: A communication apparatus receives configuration information. The configuration information includes a device address of one or more devices, the configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The communication apparatus determines, based on the configuration information, a quantity of cyclic shift positions that corresponds to the communication apparatus. The sequence configuration information is used to determine a preamble sequence. It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

It may be understood that the communication apparatus may be any communication apparatus in the UWB system except a coordinator (coordinator).

With reference to the second aspect, in a possible implementation, after the communication apparatus determines, based on the configuration information, a quantity of cyclic shift positions that corresponds to the communication apparatus, the method further includes: The communication apparatus sends a PPDU, where the PPDU includes a preamble sequence, and the preamble sequence is obtained after a target sequence in the sequence set is cyclically shifted by a quantity of cyclic shift positions equal to the quantity of cyclic shift positions that corresponds to the communication apparatus.

In this application, the preamble sequence is constructed by cyclically shifting a perfect sequence, and the quantities that are of cyclic shift positions and that correspond to the devices used for completing different services are different, so that a zero cross-correlation zone exists between preamble sequences of the devices used for completing different services, thereby improving an anti-interference capability of the UWB system. In addition, a cyclically shifted perfect sequence is still a perfect sequence. Therefore, the preamble sequence also has a desirable periodic auto-correlation characteristic, so that synchronization performance of the UWB system can be improved.

With reference to the first aspect or the second aspect, in a possible implementation, quantities that are of cyclic shift positions and that correspond to devices used for jointly completing one service in the one or more devices are the same.

With reference to the first aspect or the second aspect, in a possible implementation, the one or more devices belong to M device groups, devices in each device group are used for jointly completing one service, and one device group corresponds to one quantity of cyclic shift positions, where M is an integer greater than or equal to 1. The one or more devices correspond to a same sequence in the sequence set, and the M quantities that are of cyclic shift positions and that correspond to the M device groups are used to cyclically shift a same sequence in the sequence set. Quantities that are of cyclic shift positions and that respectively correspond to the M device groups are: 0, Z, 2Z, 3Z, ..., and (M-1)×Z, where

$$Z = \left\lfloor N/M \right\rfloor,$$

where

N represents a length of the sequence corresponding to the one or more devices, and $\left\lfloor N/M \right\rfloor$ represents rounding down of N/M.

In this application, a cyclic shift interval configured for the M device groups is large enough to make a length of the zero cross-correlation zone relatively large, thereby further reducing interference caused by a cross-correlation side lobe and improving an anti-interference capability of the UWB system.

With reference to the first aspect or the second aspect, in a possible implementation, the sequence configuration information further includes a sequence length corresponding to each device, and the sequence length is used to determine a sequence for a cyclic shift in the sequence set. For example, there is only one sequence with a same length in the sequence set. Therefore, a sequence may be uniquely identified by using a sequence length.

With reference to the first aspect or the second aspect, in a possible implementation, the sequence configuration information further includes a sequence identifier corresponding to each device, and the sequence identifier is used to identify a sequence in the sequence set.

Optionally, sequence identifiers corresponding to the devices used for jointly completing one service in the one or more devices are the same, and sequence identifiers corresponding to the devices used for completing different services in the one or more devices are different.

According to a third aspect, an embodiment of this application provides a communication apparatus. The communication apparatus is configured to perform the method in any one of the first aspect or the possible implementations of the first aspect. The communication apparatus includes a unit for performing the method in any one of the first aspect or the possible implementations of the first aspect.

According to a fourth aspect, an embodiment of this application provides a communication apparatus. The communication apparatus is configured to perform the method in any one of the second aspect or the possible implementations of the second aspect. The communication apparatus includes a unit for performing the method in any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments described below. For beneficial effects of the third aspect and the fourth aspect described above, refer to the related descriptions in the first aspect and the second aspect described above. Details are not provided herein.

According to a fifth aspect, this application provides a UWB-based physical layer protocol data unit (physical layer protocol data unit, PPDU) transmission method. The method includes: A communication apparatus generates and sends a PPDU. The PPDU includes a preamble sequence, the preamble sequence is generated after a target sequence in a sequence set is cyclically shifted, and a periodic auto-correlation side lobe amplitude of any sequence in the sequence set is 0. The target sequence and a quantity of cyclic shift positions may be determined through negotiation between a transmitter and a receiver.

The communication apparatus in this application determines a sequence from the sequence set, and generates the preamble sequence after cyclically shifting the sequence. Because a periodic auto-correlation side lobe amplitude of the sequence is 0, an auto-correlation characteristic of the preamble sequence is effectively ensured, so that a UWB system has relatively desirable synchronization performance. In addition, a zero cross-correlation zone may exist between preamble sequences generated through different cyclic shifts, so that interference caused by a cross-correlation side lobe between a plurality of communication apparatuses using different quantities of cyclic shift positions is relatively small, thereby improving an anti-interference capability of the UWB system.

With reference to the fifth aspect, in a possible implementation, the target sequence and the quantity of cyclic shift positions may be configured by a coordinator. Before the communication apparatus generates the PPDU, the method further includes: The communication apparatus receives configuration information. The configuration information includes a device address of the communication apparatus, the configuration information further includes sequence configuration information, and the sequence configuration information includes one or more of the following: a quantity of cyclic shift positions that corresponds to the communication apparatus, a sequence length corresponding to the communication apparatus, or a sequence identifier corresponding to the communication apparatus. The quantity of cyclic shift positions is used to cyclically shift the target sequence in the sequence set, the sequence length is used to determine the target sequence in the sequence set, and the sequence identifier is used to identify the target sequence in the sequence set.

According to a sixth aspect, this application provides a UWB-based PPDU transmission method. The method includes: A communication apparatus receives a PPDU and processes the PPDU. The PPDU includes a preamble sequence, the preamble sequence is generated after a target sequence in a sequence set is cyclically shifted, and a periodic auto-correlation side lobe amplitude of any sequence in the sequence set is 0. The target sequence and a quantity of cyclic shift positions may be determined through negotiation between a transmitter and a receiver.

With reference to the fifth aspect or the sixth aspect, in a possible implementation, the preamble sequence is obtained after the target sequence in the sequence set is cyclically shifted, or the preamble sequence is obtained after the target sequence in the sequence set is cyclically shifted and is then repeated once or more.

According to a seventh aspect, an embodiment of this application provides a communication apparatus. The communication apparatus is configured to perform the method in any one of the fifth aspect or the possible implementations of the fifth aspect. The communication apparatus includes a unit for performing the method in any one of the fifth aspect or the possible implementations of the fifth aspect.

According to an eighth aspect, an embodiment of this application provides a communication apparatus. The communication apparatus is configured to perform the method in any one of the sixth aspect or the possible implementations of the sixth aspect. The communication apparatus includes a unit for performing the method in any one of the sixth aspect or the possible implementations of the sixth aspect.

In the seventh aspect or the eighth aspect, the communication apparatus may include a transceiver unit and a processing unit. For specific descriptions of the transceiver unit and the processing unit, refer to apparatus embodiments described below. For beneficial effects of the seventh aspect and the eighth aspect described above, refer to the related descriptions in the fifth aspect and the sixth aspect described above. Details are not provided herein.

According to a ninth aspect, this application provides an information interaction method, applied to a UWB system. The method includes: A communication apparatus generates configuration information and sends the configuration information in a form of broadcasting. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different.

It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

It may be further understood that the sequence configuration information is used to determine a preamble sequence.

It may be further understood that the communication apparatus may be a coordinator (coordinator) in the UWB system.

A sequence obtained by performing sampling after a perfect sequence is repeated sampling interval times is still a perfect sequence. Therefore, the preamble sequence in this application is still a perfect sequence. In this case, an auto-correlation characteristic of the preamble sequence is effectively ensured, so that the UWB system has relatively desirable synchronization performance. In addition, a security problem exists in a UWB sensing scenario. For example, a preamble sequence used for sensing may be received and processed by any device. By listening to a preamble from a valid transmitter and measuring a channel impulsive response (channel impulsive response, CIR), an unauthorized user can also detect whether a target (target) exists and a specific location of the target, to analyze a target habit and steal user privacy.

However, in this application, the coordinator configures the sampling interval (the configuration information may be encrypted to prevent being learned by the unauthorized user), and samples the perfect sequence by using the configured sampling interval to generate the preamble sequence, so that the unauthorized user cannot measure the CIR, thereby improving security in a UWB sensing process. This is because even if the unauthorized user learns the perfect sequence, the unauthorized user cannot learn the sampling interval. Therefore, the unauthorized user listens to and obtains a preamble and cannot obtain a main lobe by correlating the preamble to the learned perfect sequence, that is, cannot measure the CIR.

According to a tenth aspect, this application provides an information interaction method, applied to a UWB system. The method includes: A communication apparatus receives configuration information. The configuration information includes a device address of one or more devices, the configuration information further includes sequence configuration information, and the sequence configuration information includes a sampling interval corresponding to each device. Then the communication apparatus determines, based on the configuration information, a sampling interval corresponding to the communication apparatus. A sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different.

It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

It may be further understood that the sequence configuration information is used to determine a preamble sequence.

It may be further understood that the communication apparatus may be any communication apparatus in the UWB system except a coordinator (coordinator).

With reference to the tenth aspect, in a possible implementation, after the communication apparatus determines, based on the configuration information, the sampling interval corresponding to the communication apparatus, the method further includes: The communication apparatus sends a PPDU, where the PPDU includes a preamble sequence, the preamble sequence is obtained by extracting one position from a first sequence every first sampling interval elements, the first sequence is obtained after a second sequence in the sequence set is repeated first sampling interval times, the first sampling interval is the sampling interval corresponding to the communication apparatus, and the first sampling interval and a length of the second sequence are relatively prime. In this application, the perfect sequence is sampled to generate the preamble sequence, so that an unauthorized user cannot measure a CIR, thereby improving security in a UWB sensing process. With reference to the ninth aspect or the tenth aspect, in a possible implementation, sampling intervals corresponding to devices used for jointly completing one service in the one or more devices are the same.

With reference to the ninth aspect or the tenth aspect, in a possible implementation, the sequence configuration information further includes a sequence length corresponding to each device, and the sequence length is used to determine a sequence for sampling in the sequence set. For example, there is only one sequence with a same length in the sequence set. Therefore, a sequence may be uniquely identified by using a sequence length.

With reference to the ninth aspect or the tenth aspect, in a possible implementation, the sequence configuration information further includes a sequence identifier corresponding to each device, and the sequence identifier is used to identify a sequence in the sequence set. A sampling interval corresponding to a device and a length of a sequence identified by a sequence identifier corresponding to the device are relatively prime.

Optionally, sequence identifiers corresponding to the devices used for jointly completing one service in the one or more devices are the same, and sequence identifiers corresponding to the devices used for completing different services in the one or more devices are different.

According to an eleventh aspect, an embodiment of this application provides a communication apparatus. The communication apparatus is configured to perform the method in any one of the ninth aspect or the possible implementations of the ninth aspect. The communication apparatus includes a unit for performing the method in any one of the ninth aspect or the possible implementations of the ninth aspect.

According to a twelfth aspect, an embodiment of this application provides a communication apparatus. The communication apparatus is configured to perform the method in any one of the tenth aspect or the possible implementations of the tenth aspect. The communication apparatus includes a unit for performing the method in any one of the tenth aspect or the possible implementations of the tenth aspect.

In the eleventh aspect or the twelfth aspect, the communication apparatus may include a transceiver unit and a processing unit. For specific descriptions of the transceiver unit and the processing unit, refer to apparatus embodiments described below. For beneficial effects of the eleventh aspect and the twelfth aspect described above, refer to the related descriptions in the ninth aspect and the tenth aspect described above. Details are not provided herein.

According to a thirteenth aspect, this application provides a UWB-based PPDU transmission method. The method includes: A communication apparatus generates and sends a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0.

It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

The communication apparatus in this application determines a perfect sequence from the sequence set and samples the perfect sequence to generate the preamble sequence. A sampled perfect sequence is still a perfect sequence. Therefore, an auto-correlation characteristic of the preamble sequence is effectively ensured, so that a UWB system has relatively desirable synchronization performance.

In addition, in a UWB sensing scenario, in this application, a transmitter and a receiver negotiate about the sampling interval (a negotiation process may be encrypted to prevent being learned by an unauthorized user), and the perfect sequence is sampled by using the sampling interval obtained through negotiation, to generate the preamble sequence, so that the unauthorized user cannot measure a CIR, thereby improving security in a UWB sensing process. This is because even if the unauthorized user learns the perfect sequence, the unauthorized user cannot learn the sampling interval. Therefore, the unauthorized user listens to and obtains a preamble and cannot obtain a main lobe by auto-correlating the preamble to the learned perfect sequence, that is, cannot measure the CIR.

With reference to the thirteenth aspect, in a possible implementation, before the communication apparatus generates the PPDU, the method further includes: The communication apparatus receives configuration information. The configuration information includes a device address of the communication apparatus, the configuration information further includes sequence configuration information, and the sequence configuration information includes one or more of the following: a sampling interval corresponding to the communication apparatus, a sequence length corresponding to the communication apparatus, or a sequence identifier corresponding to the communication apparatus. The sampling interval is used to perform sampling after the second sequence in the sequence set is repeated sampling interval times, the sequence length is used to determine the second sequence for sampling in the sequence set, and the sequence identifier is used to identify the second sequence in the sequence set.

According to a fourteenth aspect, this application provides a UWB-based PPDU transmission method. The method includes: A communication apparatus receives a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The communication apparatus processes the PPDU.

It may be understood that the periodic auto-correlation side lobe amplitude of any sequence in the foregoing sequence set is 0, and a periodic auto-correlation main lobe amplitude is not 0. For example, any sequence in the sequence set may be a perfect sequence.

With reference to the thirteenth aspect or the fourteenth aspect, in a possible implementation, the preamble sequence is obtained by extracting one position from a first sequence every sampling interval elements, and the first sequence is obtained after the second sequence in the sequence set is repeated sampling interval times.

According to a fifteenth aspect, an embodiment of this application provides a communication apparatus. The communication apparatus is configured to perform the method in any one of the thirteenth aspect or the possible implementations of the thirteenth aspect. The communication apparatus includes a unit for performing the method in any one of the thirteenth aspect or the possible implementations of the thirteenth aspect.

According to a sixteenth aspect, an embodiment of this application provides a communication apparatus. The communication apparatus is configured to perform the method in any one of the fourteenth aspect or the possible implementations of the fourteenth aspect. The communication apparatus includes a unit for performing the method in any one of the fourteenth aspect or the possible implementations of the fourteenth aspect.

In the fifteenth aspect or the sixteenth aspect, the communication apparatus may include a transceiver unit and a processing unit. For specific descriptions of the transceiver unit and the processing unit, refer to apparatus embodiments described below. For beneficial effects of the fifteenth aspect and the sixteenth aspect described above, refer to the related descriptions in the thirteenth aspect and the fourteenth aspect described above. Details are not provided herein.

According to a seventeenth aspect, this application provides a communication apparatus. The communication apparatus includes a processor, configured to perform the method in any one of the first aspect, the ninth aspect, or the possible implementations of either the first aspect or the ninth aspect. Alternatively, the processor is configured to execute a program stored in a memory, and when the program is executed, the method in any one of the first aspect, the ninth aspect, or the possible implementations of either the first aspect or the ninth aspect is performed.

With reference to the seventeenth aspect, in a possible implementation, the memory is located outside the communication apparatus.

With reference to the seventeenth aspect, in a possible implementation, the memory is located inside the communication apparatus.

In this application, the processor and the memory may alternatively be integrated into one device, in other words, the processor and the memory may alternatively be integrated together.

With reference to the seventeenth aspect, in a possible implementation, the communication apparatus further includes a transceiver. The transceiver is configured to send information.

According to an eighteenth aspect, this application provides a communication apparatus. The communication apparatus includes a processor, configured to perform the method in any one of the second aspect, the tenth aspect, or the possible implementations of either the second aspect or the tenth aspect. Alternatively, the processor is configured to execute a program stored in a memory, and when the program is executed, the method in any one of the second aspect, the tenth aspect, or the possible implementations of either the second aspect or the tenth aspect is performed.

With reference to the eighteenth aspect, in a possible implementation, the memory is located outside the communication apparatus.

With reference to the eighteenth aspect, in a possible implementation, the memory is located inside the communication apparatus.

In this application, the processor and the memory may alternatively be integrated into one device, in other words, the processor and the memory may alternatively be integrated together.

With reference to the eighteenth aspect, in a possible implementation, the communication apparatus further includes a transceiver. The transceiver is configured to receive information.

According to a nineteenth aspect, this application provides a communication apparatus. The communication apparatus includes a processor, configured to perform the method in any one of the fifth aspect, the thirteenth aspect, or the possible implementations of either the fifth aspect or the thirteenth aspect. Alternatively, the processor is configured to execute a program stored in a memory, and when the program is executed, the method in any one of the fifth aspect, the thirteenth aspect, or the possible implementations of either the fifth aspect or the thirteenth aspect is performed.

With reference to the nineteenth aspect, in a possible implementation, the memory is located outside the communication apparatus.

With reference to the nineteenth aspect, in a possible implementation, the memory is located inside the communication apparatus.

In this application, the processor and the memory may alternatively be integrated into one device, in other words, the processor and the memory may alternatively be integrated together.

With reference to the nineteenth aspect, in a possible implementation, the communication apparatus further includes a transceiver. The transceiver is configured to send a PPDU.

According to a twentieth aspect, this application provides a communication apparatus. The communication apparatus includes a processor, configured to perform the method in any one of the sixth aspect, the fourteenth aspect, or the possible implementations of either the sixth aspect or the fourteenth aspect. Alternatively, the processor is configured to execute a program stored in a memory, and when the program is executed, the method in any one of the sixth aspect, the fourteenth aspect, or the possible implementations of either the sixth aspect or the fourteenth aspect is performed.

With reference to the twentieth aspect, in a possible implementation, the memory is located outside the communication apparatus.

With reference to the twentieth aspect, in a possible implementation, the memory is located inside the communication apparatus.

In this application, the processor and the memory may alternatively be integrated into one device, in other words, the processor and the memory may alternatively be integrated together.

With reference to the twentieth aspect, in a possible implementation, the communication apparatus further includes a transceiver. The transceiver is configured to receive a PPDU.

According to a twenty-first aspect, this application provides a communication apparatus. The communication apparatus includes a logic circuit and an interface, and the logic circuit is coupled to the interface.

In a design, the logic circuit is configured to generate configuration information. The configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The interface is configured to output the configuration information.

In another design, the logic circuit is configured to generate configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. The periodic auto-correlation side lobe amplitude of any sequence in the sequence set is 0, and sampling intervals corresponding to the devices used for completing different services in the one or more devices are different. The interface is configured to output the configuration information.

According to a twenty-second aspect, this application provides a communication apparatus. The communication apparatus includes a logic circuit and an interface, and the logic circuit is coupled to the interface.

In a design, the interface is configured to input configuration information. The configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The logic circuit is configured to determine, based on the configuration information, a quantity of cyclic shift positions that corresponds to the communication apparatus.

In another design, the interface is configured to input configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different. The logic circuit is configured to determine, based on the configuration information, a sampling interval corresponding to the communication apparatus.

According to a twenty-third aspect, this application provides a communication apparatus. The communication apparatus includes a logic circuit and an interface, and the logic circuit is coupled to the interface.

In a design, the logic circuit is configured to generate a PPDU. The PPDU includes a preamble sequence, the preamble sequence is generated after a target sequence in a sequence set is cyclically shifted, and a periodic auto-correlation side lobe amplitude of any sequence in the sequence set is 0. The interface is configured to output the PPDU.

In another design, the logic circuit is configured to generate a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The interface is configured to output the PPDU.

According to a twenty-fourth aspect, this application provides a communication apparatus. The communication apparatus includes a logic circuit and an interface, and the logic circuit is coupled to the interface.

In a design, the interface is configured to input a PPDU. The PPDU includes a preamble sequence, the preamble sequence is generated after a target sequence in a sequence set is cyclically shifted, and a periodic auto-correlation side lobe amplitude of any sequence in the sequence set is 0. The logic circuit is configured to process the PPDU.

In another design, the interface is configured to input a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The logic circuit is configured to process the PPDU.

According to a twenty-fifth aspect, an embodiment of this application provides a computer-readable storage medium. The computer-readable storage medium is configured to store a computer program, and when the computer program is run on a computer, the method in any one of the first aspect, the ninth aspect, or the possible implementations of either the first aspect or the ninth aspect is performed.

According to a twenty-sixth aspect, an embodiment of this application provides a computer-readable storage medium. The computer-readable storage medium is configured to store a computer program, and when the computer program is run on a computer, the method in any one of the second aspect, the tenth aspect, or the possible implementations of either the second aspect or the tenth aspect is performed.

According to a twenty-seventh aspect, an embodiment of this application provides a computer-readable storage medium. The computer-readable storage medium is configured to store a computer program, and when the computer program is run on a computer, the method in any one of the fifth aspect, the thirteenth aspect, or the possible implementations of either the fifth aspect or the thirteenth aspect is performed.

According to a twenty-eighth aspect, an embodiment of this application provides a computer-readable storage medium. The computer-readable storage medium is configured to store a computer program, and when the computer program is run on a computer, the method in any one of the sixth aspect, the fourteenth aspect, or the possible implementations of either the sixth aspect or the fourteenth aspect is performed.

According to a twenty-ninth aspect, an embodiment of this application provides a computer program product. The computer program product includes a computer program or computer code, and when the computer program or computer code is run on a computer, the method in any one of the first aspect, the ninth aspect, or the possible implementations of either the first aspect or the ninth aspect is performed.

According to a thirtieth aspect, an embodiment of this application provides a computer program product. The computer program product includes a computer program or computer code, and when the computer program or computer code is run on a computer, the method in any one of the second aspect, the tenth aspect, or the possible implementations of either the second aspect or the tenth aspect is performed.

According to a thirty-first aspect, an embodiment of this application provides a computer program product. The computer program product includes a computer program or computer code, and when the computer program or computer code is run on a computer, the method in any one of the fifth aspect, the thirteenth aspect, or the possible implementations of either the fifth aspect or the thirteenth aspect is performed.

According to a thirty-second aspect, an embodiment of this application provides a computer program product. The computer program product includes a computer program or computer code, and when the computer program or computer code is run on a computer, the method in any one of the sixth aspect, the fourteenth aspect, or the possible implementations of either the sixth aspect or the fourteenth aspect is performed.

According to a thirty-third aspect, an embodiment of this application provides a computer program. When the computer program is run on a computer, the method in any one of the first aspect, the ninth aspect, or the possible implementations of either the first aspect or the ninth aspect is performed.

According to a thirty-fourth aspect, an embodiment of this application provides a computer program. When the computer program is run on a computer, the method in any one of the second aspect, the tenth aspect, or the possible implementations of either the second aspect or the tenth aspect is performed.

According to a thirty-fifth aspect, an embodiment of this application provides a computer program. When the computer program is run on a computer, the method in any one of the fifth aspect, the thirteenth aspect, or the possible implementations of either the fifth aspect or the thirteenth aspect is performed.

According to a thirty-sixth aspect, an embodiment of this application provides a computer program. When the computer program is run on a computer, the method in any one of the sixth aspect, the fourteenth aspect, or the possible implementations of either the sixth aspect or the fourteenth aspect is performed.

According to a thirty-seventh aspect, an embodiment of this application provides a wireless communication system. The wireless communication system includes: a communication apparatus for performing the method in any one of the first aspect, the ninth aspect, or the possible implementations of either the first aspect or the ninth aspect, and a communication apparatus for performing the method in any one of the second aspect, the tenth aspect, or the possible implementations of either the second aspect or the tenth aspect.

According to a thirty-eighth aspect, an embodiment of this application provides a wireless communication system. The wireless communication system includes: a communication apparatus for performing the method in any one of the fifth aspect, the thirteenth aspect, or the possible implementations of either the fifth aspect or the thirteenth aspect, and a communication apparatus for performing the method in any one of the sixth aspect, the fourteenth aspect, or the possible implementations of either the sixth aspect or the fourteenth aspect.

For the technical effects achieved in the foregoing aspects, refer to each other or refer to beneficial effects in method embodiments described below. Details are not repeated herein.

## BRIEF DESCRIPTION OF DRAWINGS

To describe the technical solutions in embodiments of this application more clearly, the following briefly describes the accompanying drawings needing to be used in descriptions of embodiments of this application.

FIG. 1 is a diagram of a structure of a wireless communication system according to an embodiment of this application;

FIG. 2 is a diagram of another structure of a wireless communication system according to an embodiment of this application;

FIG. 3 is a diagram of a frame structure of a PPDU according to an embodiment of this application;

FIG. 4 is a diagram of a symbol structure included in a SYNC field according to an embodiment of this application;

FIG. 5 is a diagram of an auto-correlation simulation result of an Ipatov sequence according to an embodiment of this application;

FIG. 6 is a diagram of a cross-correlation simulation result of two different Ipatov sequences according to an embodiment of this application;

FIG. 7 is a diagram of fragmented transmission of a UWB signal according to an embodiment of this application;

FIG. 8 is a schematic flowchart of an information interaction method according to an embodiment of this application;

FIG. 9 is a diagram of preamble sequences of M device groups according to an embodiment of this application;

FIG. 10a is a diagram of preamble sequences of two device groups according to an embodiment of this application;

FIG. 10b is a diagram of preamble sequences of four device groups according to an embodiment of this application;

FIG. 11 is a diagram of a zero cross-correlation zone according to an embodiment of this application;

FIG. 12 is a schematic flowchart of a UWB-based PPDU transmission method according to an embodiment of this application;

FIG. 13 is another schematic flowchart of an information interaction method according to an embodiment of this application;

FIG. 14 is another schematic flowchart of a UWB-based PPDU transmission method according to an embodiment of this application;

FIG. 15 is a diagram of a structure of a communication apparatus according to an embodiment of this application;

FIG. 16 is a diagram of a structure of a communication apparatus 1000 according to an embodiment of this application; and

FIG. 17 is a diagram of another structure of a communication apparatus according to an embodiment of this application.

## DESCRIPTION OF EMBODIMENTS

The following clearly and completely describes the technical solutions in embodiments of this application with reference to the accompanying drawings in embodiments of this application.

In this application, terms "first", "second", and the like are merely used to distinguish between different objects, but are not used to describe a particular order. In addition, the terms "include", "comprise", and any variation thereof are intended to cover non-exclusive inclusion. For example, a process, a method, a system, a product, a device, or the like that includes a series of steps or units is not limited to the listed steps or units, but optionally further includes steps, units, or the like that are not listed, or optionally further includes steps or units that are inherent to such a process, a method, a system, a product, a device, or the like.

In descriptions of this application, "at least one" indicates one or more, "a plurality of" indicates two or more, and "at least two" indicate two, three, or more than three. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof indicates any combination of the items. For example, at least one of a, b, or c may indicate a, b, c, "a and b", "a and c", "b and c", or "a, b, and c".

In this application, words such as "example" or "such as" are used to indicate an example, an instance, or descriptions. Any embodiment or design solution described as "example", "for example", or "such as" in this application should not be construed as being more preferred or more advantageous than another embodiment or design solution. To be precise, use of the term such as "example", "for example", or "such as" is intended to specifically present a related concept.

Elements indicated by using singular numbers in this application are intended to indicate "one or more" rather than "one and only one", unless specifically stated.

It should be understood that, in embodiments of this application, determining B based on A does not mean determining B based only on A, but may mean determining B based on A and/or other information.

The technical solutions provided in this application are applicable to a wireless personal area network (wireless personal area network, WPAN) based on a UWB technology. For example, a method provided in this application is applicable to Institute of Electrical and Electronics Engineers (Institute of Electrical and Electronics Engineers, IEEE) 802.15 series protocols, such as an 802.15.4a protocol, an 802.15.4z protocol, or an 802.15.4ab protocol, a future-generation UWB WPAN standard, or the like. Details are not listed one by one herein. The method provided in this application may be further applied to various communication systems, such as an Internet of things (Internet of things, IoT) system, vehicle-to-X (vehicle-to-X, V2X), a narrowband Internet of things (narrowband Internet of things, NB-IoT) system; and may be applied to a device in vehicle-to-X, an Internet of things (IoT, Internet of things) node, a sensor, and the like in the Internet of things (IoT, Internet of things), a smart camera in a smart home, a smart remote control, a smart water meter, a smart electricity meter, a sensor in a smart city, and the like. The method provided in this application is further applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, or may be a 5th-generation (5th-generation, 5G) communication system, a 6th-generation (6th-generation, 6G) communication system, or the like.

The UWB technology is a new wireless communication technology. The UWB technology transmits data by using nanosecond non-sinusoidal wave narrow pulses, modulates an impulse pulse with a very steep rise and fall time, and therefore, occupies a very wide spectrum range, so that a signal has a gigametric (GHz) bandwidth. A bandwidth used by UWB is usually at least 1 GHz. A UWB system does not need to generate a sinusoidal carrier signal, but may directly transmit an impulse sequence. Therefore, the UWB system has a very wide spectrum and a very low average power. A UWB wireless communication system has advantages of strong multipath resolution power, low power consumption, high confidentiality, and the like, thereby facilitating coexistence with another system, so that spectrum utilization and a system capacity are increased. In addition, in short-distance communication application, a transmit power of a UWB transmitter may generally be less than 1 mW (milliwatt). Theoretically, interference generated by a UWB signal is equivalent to only white noise. This facilitates good coexistence between ultra-wideband communication and existing narrowband communication. Therefore, the UWB system may simultaneously operate with a narrowband (narrowband, NB) communication system without mutual interference. The method provided in this application may be implemented by a communication apparatus in a wireless communication system. In a communication apparatus, an apparatus or a chip for implementing a function of the UWB system may be referred to as a UWB module, and an apparatus or a chip for implementing a function of the narrowband communication system may be referred to as a narrowband communication module. The UWB module and the narrowband communication module may be different apparatuses or chips. Certainly, the UWB module and the narrowband communication module may alternatively be integrated on one apparatus or chip. An implementation of the UWB module and the narrowband communication module in the communication apparatus is not limited in embodiments of this application. The communication apparatus in this application includes a UWB module, and optionally further includes a narrowband communication module.

Although the WPAN is mainly used as an example in embodiments of this application, for example, a network applied to IEEE 802.15 series standards is used as an example, it is easy for a person skilled in the art to understand that the various aspects in this application may be extended to other networks using various standards or protocols, such as a wireless local area network (wireless local area network, WLAN), Bluetooth (Bluetooth), a high performance radio LAN (high performance radio LAN, HiperLAN) (a wireless standard similar to an IEEE 802.11 standard, mainly used in Europe), a wide area network (WAN), or another network known now or developed in the future. Therefore, regardless of a coverage area and a wireless access protocol that are used, the various aspects provided in this application are applicable to any suitable wireless network. Optionally, the communication apparatus in embodiments of this application may be a device that supports a plurality of WPAN standards, such as 802.15.4a, 802.15.4z, IEEE 802.15.4ab currently under discussion, or a subsequent release.

The method provided in this application may be implemented by the communication apparatus in the wireless communication system. The communication apparatus may be an apparatus in the UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various handheld devices, vehicle-mounted devices (such as a vehicle or a component installed on a vehicle), wearable devices, Internet of things (Internet of things, IoT) devices, computing devices, other processing devices connected to a wireless modem, and the like that support the UWB technology. Details are not listed herein one by one. For another example, the communication apparatus may include a central control point, such as a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Details are not listed herein one by one. It may be understood that the foregoing descriptions about the communication apparatus are applicable to a first communication apparatus and a second communication apparatus in this application.

In embodiments of this application, the communication apparatus may include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), such as a Linux operating system, a Unix operating system, an Android operating system, an iOS operating system, or a Windows operating system. The application layer includes applications such as a browser, an address book, word processing software, and instant messaging software. In addition, a specific structure of an execution subject of the method provided in embodiments of this application is not specifically limited in embodiments of this application, provided that a program that records code of the method provided in embodiments of this application can be run, to perform communication based on the method provided in embodiments of this application.

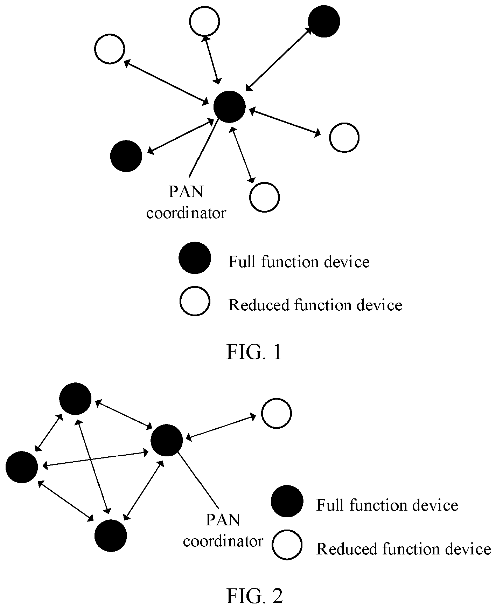

FIG. 1 is a diagram of a structure of a wireless communication system according to an embodiment of this application. As shown in FIG. 1, the wireless communication system is a star topology structure. In such a structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In such a structure, a central control node (for example, a PAN coordinator in FIG. 2) may perform data communication with one or more other devices. Data communication may alternatively be performed between the other different devices. In FIG. 1 and FIG. 2, both a full function device (full function device) and a reduced function device (reduced function device) may be understood as communication apparatuses in this application. The full function device and the reduced function device are relative to each other. For example, the reduced function device cannot be a PAN coordinator (coordinator). For another example, compared with the full function device, the reduced function device may have no coordination capability or may have a lower communication rate than the full function device. It may be understood that the PAN coordinator shown in FIG. 2 is merely an example, and the other three full function devices shown in FIG. 2 may alternatively function as PAN coordinators. The PAN coordinators are not shown one by one herein. It may be further understood that the full function device and the reduced function device in this application are merely examples of the communication apparatus, and any apparatus that can implement a UWB-based PPDU transmission method provided in this application falls within the protection scope of this application.

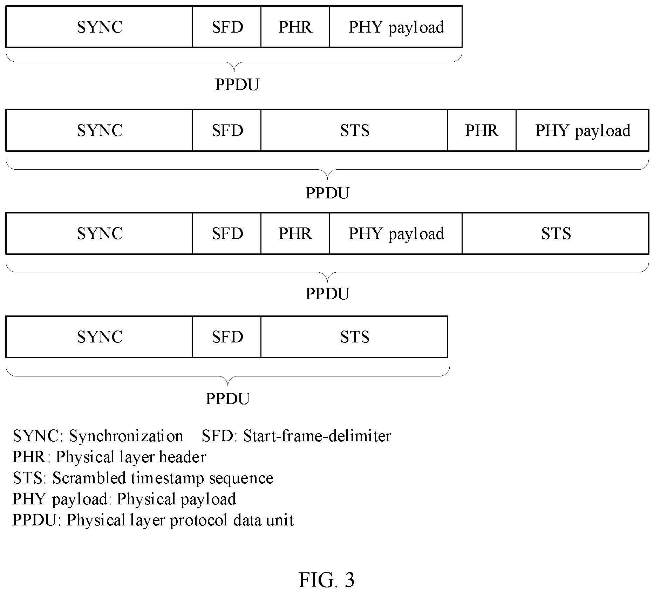

In IEEE 802.15.4a and IEEE 802.15.4z standards, a PPDU structure of a UWB signal is shown in FIG. 3. FIG. 3 is a diagram of a frame structure of a PPDU according to an embodiment of this application. FIG. 3 shows four PPDU structures. The PPDU includes one or more of the following: a synchronization (synchronization, SYNC) field, a start-of-frame delimiter (start-of-frame delimiter, SFD) field, a physical layer header (physical layer header, PHR), a physical payload field (PHY payload field), or a scrambled timestamp sequence (scrambled timestamp sequence, STS). For example, a receive end performs PPDU detection and synchronization based on the synchronization (SYNC) field; the PHR carries some physical layer indication information, such as modulation and coding information or PPDU length information, to assist the receive end in correctly demodulating data; and the physical payload field is used to carry data.

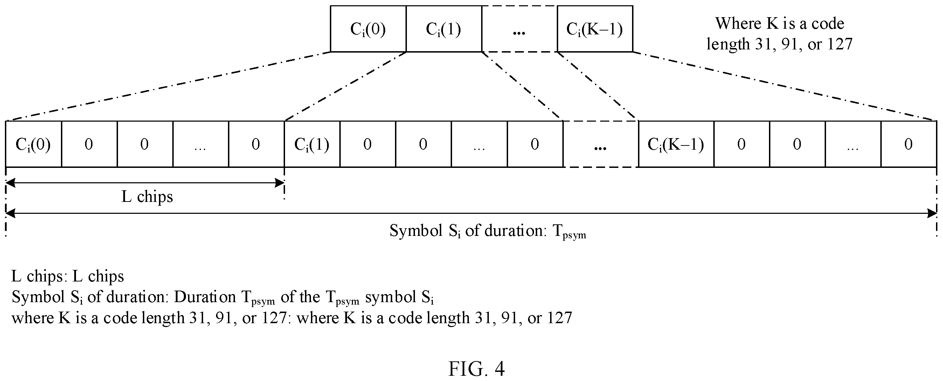

The synchronization (SYNC) field may include a plurality of repeated symbols, and the symbol is generated by a preamble sequence. FIG. 4 is a diagram of a symbol structure included in a SYNC field according to an embodiment of this application. As shown in FIG. 4, $C_i(0)$, $C_i(1)$, ..., and $C_i(K-1)$ represent a preamble sequence with a length K. The length of the preamble sequence may be 31, 91, or 127. For example, the preamble sequence may be a ternary sequence (also referred to as an Ipatov sequence) including three types of values {-1, 0, +1} in, for example, either of an 802.15.4a protocol and an 802.15.4z protocol. For example, for specific content of the ternary sequence with the length 31, 91, or 127, refer to an 802.15.4a standard and an 802.15.4z standard. Details are not provided herein.

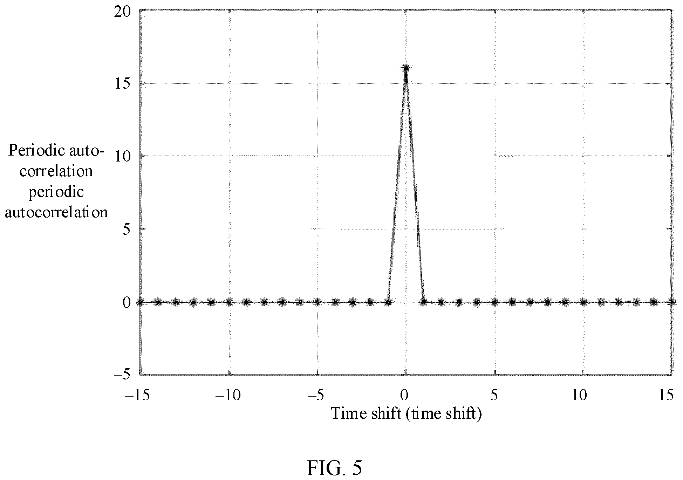

For example, an Ipatov sequence with a length 31 in the 802.15.4a standard is used as an example. A simulation result of a periodic auto-correlation characteristic of the Ipatov sequence is shown in FIG. 5. FIG. 5 is a diagram of an auto-correlation simulation result of an Ipatov sequence according to an embodiment of this application. As shown in FIG. 5, the Ipatov sequence with the length 31 has a value at an origin (in other words, the ordinate at the origin is not 0), and is 0 at all other places of the abscissa (in other words, the ordinate at other non-origin points is 0). That is, a periodic auto-correlation main lobe amplitude of the Ipatov sequence with the length 31 is 16 (it may also be understood that a peak value of a periodic auto-correlation is 16), and a periodic auto-correlation side lobe amplitude is 0. It may be understood that the abscissa shown in FIG. 5 represents a time shift (time shift), and the ordinate represents a periodic auto-correlation (periodic auto correlation) amplitude. The abscissa shown in FIG. 5 may alternatively be understood as an element, a position, or the like. Interpretation of the abscissa used in simulation of a periodic auto-correlation function is not limited in embodiments of this application. Because an auto-correlation may be understood as a cross-correlation between a signal and the signal at a different time point, positive and negative axis values in the abscissa may be determined based on the length of the Ipatov sequence.

In this application, a sequence whose periodic auto-correlation main lobe amplitude is not 0 and periodic auto-correlation side lobe amplitude is 0 is referred to as a perfect sequence (Perfect Sequence).

It may be understood that, for a sequence x(n) with a length N, a periodic auto-correlation function $R_x(\tau)$ of the sequence is defined as follows:

$$R_x(\tau) = \sum_{n=0}^{N-1} x(n) * x((n+\tau) \bmod N) \quad \dots\dots\dots\dots\dots\dots\dots\dots\dots\dots\dots\dots\dots\dots\dots\dots\dots (1\text{-}1)$$

Herein, (n+τ) mod N represents a remainder obtained by dividing (n+τ) by N. This is not described in detail below.

Based on an auto-correlation characteristic of a sequence, a receive end may perform correlation processing between the same sequence and a received UWB signal, for example, a correlation operation, and perform synchronization and other operations by using a result of the correlation processing.

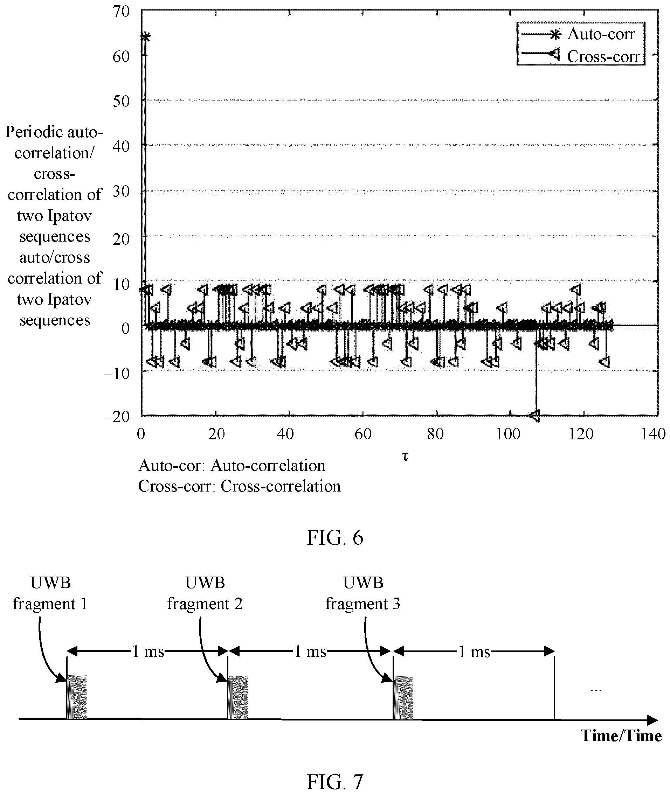

For example, two Ipatov sequences with a length 127 in the 802.15.4a standard are used as an example. A simulation result of a periodic cross-correlation characteristic of the Ipatov sequence is shown in FIG. 6. FIG. 6 is a diagram of a cross-correlation simulation result of two different Ipatov sequences according to an embodiment of this application. FIG. 6 shows a simulation result of a cross-correlation between code sequences (code sequence) with code indexes (code index) 9 and 10 in the 802.15.4z standard. As may be seen from FIG. 6, when two different Ipatov sequences with a length 127 are periodically cross-correlated, there is no zero correlation zone, side lobe amplitudes of the two different Ipatov sequences are mostly 8 or -8, and a side lobe amplitude with a largest absolute value is -20. When a cross-correlation side lobe amplitude is relatively large, an error may be caused during determining of an auto-correlation main lobe of an Ipatov sequence, that is, a cross-correlation side lobe may be determined as the auto-correlation main lobe of the Ipatov sequence (for example, a position at which a cross-correlation side lobe amplitude is -20 in FIG. 6 may be determined as a position at which an auto-correlation main lobe of the Ipatov sequence is located), resulting in poor anti-interference performance of the Ipatov sequence. It may be understood that, the abscissa shown in FIG. 6 represents values of τ in a periodic auto-correlation function $R_x(\tau)$ and a periodic cross-correlation function $R_{x,y}(\tau)$, where x and y represent two Ipatov sequences respectively, and the ordinate represents an amplitude of a periodic auto-correlation/cross-correlation of the two Ipatov sequences (auto/cross correlation of two Ipatov sequences).

It may be understood that, for sequences x(n) and y(n) with a length N, a periodic cross-correlation function $R_{x,y}(\tau)$ of the sequences is defined as follows:

$$R_{x,y}(\tau) = \sum_{n=0}^{N-1} x(n) * y((n+\tau) \bmod N) \quad \dots\dots\dots\dots\dots\dots\dots\dots\dots\dots\dots\dots\dots\dots\dots (1\text{-}2)$$

To sum up, it may be seen from FIG. 5 and FIG. 6 that although preamble sequences defined in 802.15.4a and 802.15.4z have a desirable periodic auto-correlation characteristic, a cross-correlation side lobe amplitude between different preamble sequences is relatively large, leading to poor anti-interference performance of the preamble sequence.

In addition, because a bandwidth of an ultra-wideband system is very large, to reduce interference of the ultra-wideband to another device at work, the Federal Communications Commission (FCC) of the United States has strictly restricted power spectral density of a UWB signal. According to the Code of Federal Regulations (Code of Federal Regulations, CFR) of the United States, there are mainly two rules:

Rule 1: An average value of maximum power spectral density (power spectral density, PSD) of a transmitted UWB signal within one millisecond cannot be greater than 41.3 dBm per megahertz.
Rule 2: A maximum power of the transmitted UWB signal within any bandwidth of 50 MHz cannot exceed 1 milliwatt.

Although the rule 1 limits a total energy (no more than 37 nJ (nanojoule) at a bandwidth of 500 MHz) of the UWB signal transmitted within 1 millisecond, an instantaneous power of the transmitted signal may be increased by concentrating energy in a shorter time for transmission, thereby increasing a coverage area of the UWB signal and increasing a signal-to-noise ratio of a signal received by a receive end. Based on this, in some scenarios in which a transmission power needs to be increased, a UWB signal transmission method is shown in FIG. 7. FIG. 7 is a diagram of fragmented transmission of a UWB signal according to an embodiment of this application. As shown in FIG. 7, a transmit end fragments a to-be-transmitted UWB signal into a plurality of fragments (fragment), a time length of each UWB fragment (UWB fragment) signal is less than 1 millisecond, and only one UWB segment is sent within each millisecond. Each UWB segment is a PPDU. Corresponding to the fragmented transmission of the UWB signal, a PPDU frame structure of the UWB fragment signal may include only a synchronization (synchronization, SYNC) field, and optionally include a start-of-frame delimiter (start-of-frame delimiter, SFD) field. The PPDU frame structure of the UWB fragment signal does not include a data part.

It may be understood that, the fragmented transmission may increase the instantaneous power of the UWB signal, thereby increasing the coverage area of the UWB signal and increasing the signal-to-noise ratio of the signal received by the receive end.

Because a frame structure (shown in FIG. 3 above) of a UWB signal in the 802.15.4a and 802.15.4z standards includes another field in addition to a synchronization (SYNC) field, if the preamble sequences (for example, an Ipatov sequence with a length 31, 91, or 127) defined in the 802.15.4a and 802.15.4z standards is applied to the UWB fragment (UWB fragment) signal shown in FIG. 7, serious interference to a device (or an existing UWB device) that supports only the 802.15.4a or 802.15.4z standard is caused. This is because the existing UWB device may receive no subsequent signal after receiving an identifiable preamble sequence.

It may be understood that the UWB device may refer to a communication apparatus that supports the UWB technology (for example, the 802.15 series protocols). This is not described in detail below.

Embodiments of this application provide an information interaction method and a related apparatus. Different quantities of cyclic shift positions are allocated to devices used for completing different services, so that a cross-correlation side lobe amplitude between preamble sequences generated after devices perform different cyclic shifts on a perfect sequence (Perfect Sequence) is small, thereby improving an anti-interference capability of a UWB system, and avoiding interference to an existing UWB device (because the existing UWB device cannot identify the preamble sequence in this application). In addition, because the perfect sequence (Perfect Sequence) has a desirable periodic auto-correlation characteristic, the UWB system also has relatively desirable synchronization performance.

The following describes the technical solutions provided in this application in detail with reference to more accompanying drawings.

To describe the technical solutions of this application more clearly, this application is explained by using a plurality of embodiments. Refer to the following for details. In this application, unless otherwise specified, same or similar parts between various embodiments or implementations may be mutually referenced. In embodiments of this application, and the implementations/methods/implementation methods in embodiments, if there is no special explanation and logical conflict, the terms and/or descriptions between different embodiments and between the implementations/methods/implementation methods in embodiments are consistent and may be mutually referenced. The technical features in different embodiments and the implementations/methods/implementation methods in embodiments may be combined to form new embodiments, implementations, methods, or implementation methods based on their inherent logical relationships. The implementations of this application described below do not constitute a limitation on the protection scope of this application.

The communication apparatus in this application may support not only 802.15 series protocols, such as an 802. 15.4ab standard or a next-generation standard of an 802. 15.4ab standard, but also other standard protocols (for example, 802.11 series protocols), for example, a plurality of wireless local area network (wireless local area network, WLAN) standards of an 802.11 family, such as 802.11ax, 802.11ac, 802.11n, 802.11g, 802.11b, 802.11a, 802.11be, a next generation thereof.

**Embodiment 1**

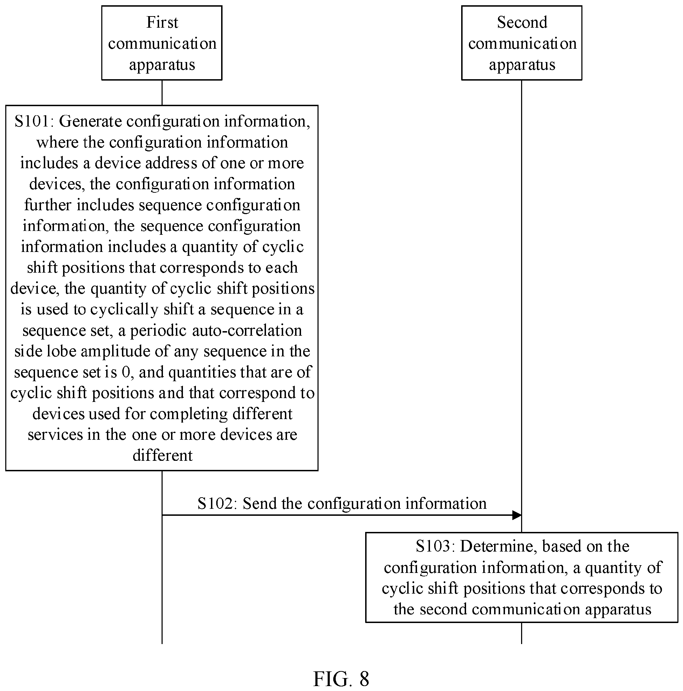

Description of Embodiment 1 of this application is mainly about that a coordinator configures different quantities of cyclic shift positions for devices used for completing different services, so that a cross-correlation side lobe amplitude between preamble sequences generated by the devices based on the configured quantity of cyclic shift positions and a perfect ternary sequence (Perfect Ternary Sequence) is small, thereby improving an anti-interference capability of a UWB system. FIG. 8 is a schematic flowchart of an information interaction method according to an embodiment of this application. A first communication apparatus in the method may be a PAN coordinator in FIG. 1 or FIG. 2, and a second communication apparatus may be any device rather than the PAN coordinator in FIG. 1 or FIG. 2. As shown in FIG. 8, the information interaction method includes but is not limited to the following steps:

S101: The first communication apparatus generates configuration information, where the configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different.

S102: The first communication apparatus sends the configuration information. For example, the first communication apparatus sends the configuration information in a manner of broadcasting.

Correspondingly, one or more communication apparatuses receive the configuration information. It may be understood that a device address is used to identify a device. The device address in this embodiment of this application may be a complete address, for example, a complete MAC address, or a part of a complete address, such as first 16 bits or first 8 bits of a MAC address. An implementation of the device address is not limited in embodiments of this application. In some embodiments, the device address included in the configuration information may alternatively be replaced with a device identifier.

Optionally, the sequence configuration information includes a quantity of cyclic shift positions that corresponds to each of the one or more devices, and the quantity of cyclic shift positions is used to cyclically shift the sequence in the sequence set. The sequence configuration information is used to determine a preamble sequence. For example, the preamble sequence may be obtained after the sequence in the sequence set is cyclically shifted, or may be obtained after the sequence in the sequence set is cyclically shifted and is then repeated once or more. It may be understood that, if the quantity of cyclic shift positions is 0, the preamble sequence is the sequence in the sequence set, or is the sequence repeated once or more.

The periodic auto-correlation side lobe amplitude of any sequence in the sequence set is 0, and the periodic auto-correlation main lobe amplitude is not 0. That is, the periodic auto-correlation function $R(\tau)=0$ of any sequence in the sequence set is true for any $\tau$ not equal to 0. In other words, any sequence in the sequence set is a perfect sequence. For specific content of each sequence in the sequence set in this embodiment of this application, refer to descriptions below. Details are not provided in detail herein. It may be understood that the perfect sequence usually includes at least two types of elements of 1, -1, and 0. A cyclically shifted perfect sequence is still a perfect sequence. Therefore, the preamble sequence in this embodiment of this application is also the perfect sequence.

Optionally, the quantities that are of cyclic shift positions and that correspond to the devices used for completing different services in the one or more devices are different. In other words, the quantities that are of cyclic shift positions and that correspond to the devices performing different services are different. Quantities that are of cyclic shift positions and that correspond to devices used for jointly completing one service in the one or more devices are the same. In other words, a plurality of devices may correspond to one quantity of cyclic shift positions.

Optionally, the one or more devices belong to M device groups, each device group includes at least one device, and devices in each device group are used for jointly completing one service. One device group corresponds to one quantity of cyclic shift positions, and the M quantities that are of cyclic shift positions and that correspond to the M device groups are different. M is an integer greater than or equal to 1. The one or more devices correspond to a same sequence in the sequence set, and the M quantities that are of cyclic shift positions and that correspond to the M device groups are used to cyclically shift a same sequence in the sequence set. A length of the sequence is N. For example, the quantities that are of cyclic shift positions and that respectively correspond to the M device groups are: 0, Z, 2Z, 3Z, ..., and (M-1)$\times$Z, where Z meets the following condition:

$$Z = \lfloor N/M \rfloor \quad .................................................................................................(2\text{-}1)$$

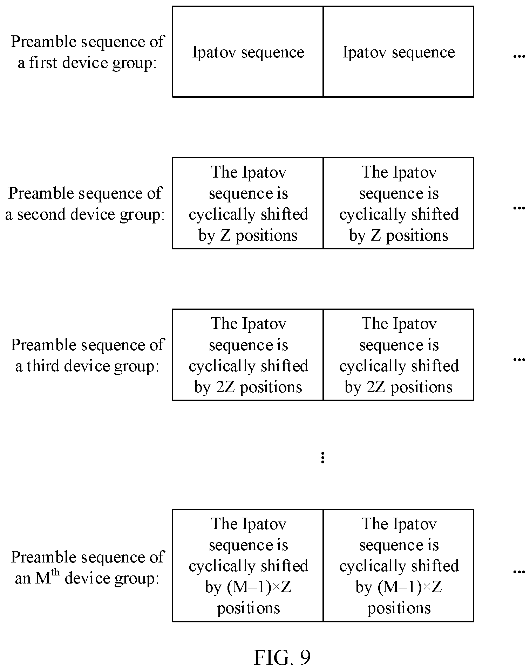

For example, that any sequence in the sequence set is an Ipatov sequence is used as an example, and the M quantities that are of cyclic shift positions and that correspond to the M device groups are used to cyclically shift a same Ipatov sequence in the sequence set. Preamble sequences of the M device groups are shown in FIG. 9. FIG. 9 is a diagram of preamble sequences of M device groups according to an embodiment of this application. As shown in FIG. 9, a preamble sequence of a first device group is an Ipatov sequence that is not cyclically shifted (or a quantity of cyclic shift positions is 0) and that is repeated once or more, a preamble sequence of a second device group is an Ipatov sequence cyclically shifted by Z positions (Ipatov cycle shift by Z positions) and then repeated once or more, a preamble sequence of a third device group is an Ipatov sequence cyclically shifted by 2Z positions (Ipatov cycle shift by 2$\times$Z positions) and then repeated once or more, and so on. A preamble sequence of an Mth device group is an Ipatov sequence cyclically shifted by (M-1)$\times$Z positions (Ipatov cycle shift by (M-1)$\times$Z positions) and then repeated once or more.

In this case, a zero cross-correlation zone exists between preamble sequences of two adjacent device groups (such as an ith device group and an (i+1)th device group, where a value of i is 1, 2, 3, ..., or (M-1)) in FIG. 9, and a length of the zero cross-correlation zone is $\lfloor N/M \rfloor$.

It may be understood that, when a length Z of the zero cross-correlation zone remains unchanged, a larger N leads to a larger M, that is, more devices (that is, a quantity of users) are supported.

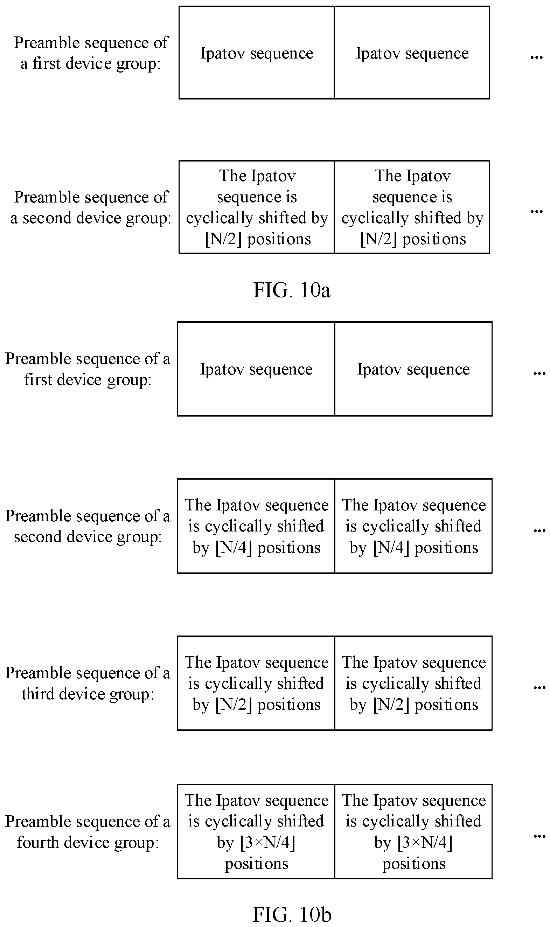

For another example, that M is equal to 2 and 4 is used as examples. Preamble sequences of two device groups are shown in FIG. 10a, and FIG. 10a is a diagram of preamble sequences of two device groups according to an embodiment of this application. Preamble sequences of four device groups are shown in FIG. 10b, and FIG. 10b is a diagram of preamble sequences of four device groups according to an embodiment of this application. As shown in FIG. 10a, a preamble sequence of a first device group is an Ipatov sequence with a length N that is cyclically shifted by 0 positions (or that is not cyclically shifted) and that is repeated once or more, and a preamble sequence of a second device group is an Ipatov sequence cyclically shifted by $\lfloor N/2 \rfloor$ positions and then repeated once or more. In this case, a length of a zero cross-correlation zone between the preamble sequences of the two device groups in FIG. 10a is $\lfloor N/2 \rfloor$. As shown in FIG. 10b, a preamble sequence of a first device group is an Ipatov sequence with a length N that is cyclically shifted by 0 positions (or that is not cyclically shifted) and that is then repeated once or more, a preamble sequence of a second device group is an Ipatov sequence cyclically shifted by $\lfloor N/4 \rfloor$ positions and then repeated once or more, a preamble sequence of a third device group is an Ipatov sequence cyclically shifted by $\lfloor N/2 \rfloor$ positions and then repeated once or more, and a preamble sequence of a fourth device group is an Ipatov sequence cyclically shifted by $\lfloor 3 \times N/4 \rfloor$ positions and then repeated once or more. In this case, a length of a zero cross-correlation zone between preamble sequences of two adjacent device groups (such as an $i^{th}$ device group and an $(i+1)^{th}$ device group, where a value of i is 1, 2, or 3) in FIG. 10b is $\lfloor N/4 \rfloor$.

It may be understood that, although a sequence in the sequence set being an Ipatov sequence is used as an example in FIG. 9, FIG. 10a, and FIG. 10b, the sequence in the sequence set is not limited to be a specific perfect sequence in this embodiment of this application.

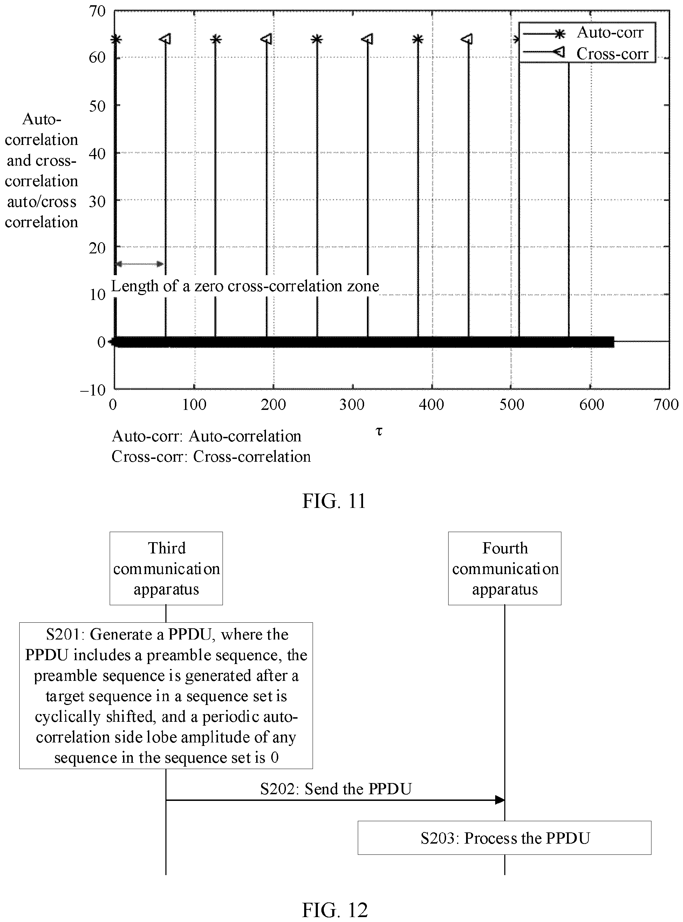

It may be understood that, the zero cross-correlation zone may be understood as an absence of a cross-correlation side lobe within a time shift, and the time shift is a length Z of the zero cross-correlation zone. That is, there are continuous $\tau$ values, with which a periodic cross-correlation function $R_{x,y}(\tau)$ is 0, and the continuous $\tau$ values are referred to as the zero cross-correlation zone. FIG. 11 is a diagram of a zero cross-correlation zone according to an embodiment of this application. As shown in FIG. 11, a zero amplitude value zone between an auto-correlation main lobe and a first cross-correlation side lobe is the zero cross-correlation zone. The abscissa shown in FIG. 11 represents a value of $\tau$ in a periodic auto-correlation function $R_x(\tau)$ and a periodic cross-correlation function $R_{x,y}(\tau)$, where x and y represent two sequences respectively, and the ordinate represents an amplitude of a periodic auto-correlation and an amplitude of a periodic cross-correlation. However, as may be understood, a zero auto-correlation zone is that, in addition to that an auto-correlation amplitude at an origin is not 0, an auto-correlation amplitude of the zero auto-correlation zone on other continuous time shifts is 0. That is, there are continuous $\tau$ values, with which a periodic auto-correlation function $R_x(\tau)$ is 0, and the continuous $\tau$ values are referred to as the zero auto-correlation zone.

Optionally, perfect sequences corresponding to the devices used for completing different services in the one or more devices may be the same or different. This is not limited in embodiments of this application.

Optionally, during actual application, when a plurality of devices used for jointly completing one service cyclically shift a same sequence, quantities of cyclic shift positions may be different; and when a plurality of devices used for jointly completing one service cyclically shift different sequences, quantities of cyclic shift positions may be the same or different.

Optionally, the sequence configuration information further includes a sequence length corresponding to each device, and the sequence length is used to determine a sequence for a cyclic shift in the sequence set. For example, there is only one sequence with a same length in the sequence set. Therefore, a sequence may be uniquely identified by using a sequence length.

Optionally, the sequence configuration information further includes a sequence identifier corresponding to each device, and the sequence identifier is used to identify a sequence in the sequence set. Sequence identifiers corresponding to the devices used for jointly completing one service in the one or more devices are the same, and sequence identifiers corresponding to the devices used for completing different services in the one or more devices are different.

S103: The second communication apparatus determines, based on the configuration information, a quantity of cyclic shift positions that corresponds to the second communication apparatus.

Optionally, after receiving the configuration information broadcast by the first communication apparatus, the one or more communication apparatuses may determine quantities that are of cyclic shift positions and that correspond to the one or more communication apparatuses. For ease of description, the following descriptions are provided by using an example in which the second communication apparatus receives the configuration information.

After receiving the configuration information, the second communication apparatus searches, based on the device address of the one or more devices included in the configuration information, the sequence configuration information included in the configuration information for a quantity of cyclic shift positions that corresponds to a device matching a device address of the second communication apparatus. The second communication apparatus may then determine, from the sequence set, a target sequence to be cyclically shifted by the second communication apparatus, and obtain a preamble sequence after cyclically shifting the target sequence (the target sequence is repeatedly once or more) by the quantity of cyclic shift positions equal to the quantity of cyclic shift positions that corresponds to the second communication apparatus. The second communication apparatus sends a PPDU, and the PPDU includes the preamble sequence. Optionally, the preamble sequence may be carried in a synchronization (SYNC) field of the PPDU. For a specific carrying manner, refer to FIG. 4 above. This is not described herein. In this embodiment of this application, a frame structure of the PPDU may include only the synchronization (SYNC) field, and may optionally include a start-frame-delimiter (SFD) field. The frame structure of the PPDU in this embodiment of this application may alternatively be any frame structure shown in FIG. 3. This is not limited in embodiments of this application.

Optionally, a manner of determining the foregoing target sequence includes but is not limited to the following

**EP 4 529 066 A1**

three. In a first possible implementation, the second communication apparatus negotiates with another party interacting with the second communication apparatus (or performing a same service with the second communication apparatus) to determine which sequence in the sequence set is a sequence to be cyclically shifted. For ease of description, the sequence determined through negotiation is recorded as the target sequence. In a second possible implementation, the sequence configuration information further includes the sequence length corresponding to each device. After receiving the sequence configuration information, the second communication apparatus may determine a sequence length corresponding to the second communication apparatus, and search, as the target sequence based on the sequence length corresponding to the second communication apparatus, the sequence set for a sequence equal to the sequence length. In the implementation, there is only one sequence with a same length in the sequence set. In a third implementation, the sequence configuration information further includes the sequence identifier corresponding to each device. After receiving the sequence configuration information, the second communication apparatus may determine a sequence identifier corresponding to the second communication apparatus. A sequence identified by the sequence identifier in the sequence set is the target sequence.

In this embodiment of this application, the preamble sequence is constructed by cyclically shifting the perfect sequence, and the quantities that are of cyclic shift positions and that correspond to the devices used for completing different services are different, so that a zero cross-correlation zone exists between preamble sequences of the devices used for completing different services, thereby improving an anti-interference capability of the UWB system. In addition, a cyclically shifted perfect sequence is still a perfect sequence. Therefore, the preamble sequence also has a desirable periodic auto-correlation characteristic, so that synchronization performance of the UWB system can be improved. In addition, the preamble sequence in this embodiment of this application does not interfere with an existing UWB device.

The following describes the sequence set and the sequences in the sequence set in this embodiment of this application by using examples.

For example, any sequence in the sequence set in this embodiment of this application is a perfect sequence, and the perfect sequence includes three elements: 1, -1, and 0. It may be understood that, the element 1 in the sequence may be represented by a positive pulse, the element -1 may be represented by a negative pulse, and the element 0 represents no pulse.

Table 1 below shows some sequences that may be used in the sequence set in this embodiment of this application. It may be understood that, the sequences in Table 1 are only examples, and may have various variants. For example, a cyclic shift, negation, or a reversal is performed on the sequence in Table 1 to obtain an equivalent sequence with a same length. The various variants of the sequences in Table 1 all fall within the protection scope of embodiments of this application.

17

Table 1

| Sequence name | Representative sequence (an equivalent sequence with a same length is not listed) | Used channel |
|---|---|---|
| $C_1$ N=6 | 1, 0, -1, 1, 0, 1 | One or more of channel numbers 0 to 15 |
| $C_2$ N=13 | 1, 0, 1, 0, 0, 1, -1, 1, 0, -1, -1, 1, 1 | One or more of channel numbers 0 to 15 |
| $C_3$ N=21 | 1, 1, 1, 1, 1, -1, 1, 0, 1, 0, -1, 1, 1, -1, 0, 0, 1, -1, 0, -1, -1 | One or more of channel numbers 0 to 15 |
| $C_4$ N=26 | 1, 1, 1, -1, 0, 1, 0, 0, 1, -1, 0, -1, 0, 0, 0, 0, 0, 1, 0, 0, 0, 0, 0, 0, 0, 0 | One or more of channel numbers 0 to 15 |
| $C_5$ N=31 | 1, 0, 1, 1, 0, 0, 1, 1, -1, 1, -1, 0, 0, 0, 1, 1, 0, 1, -1, -1, 0, 1, 0, -1, 0, 0, 0, 0, -1, 0, 0 | One or more of channel numbers 0 to 15 |
| $C_6$ N=31 | 1, 0, 1, 1, 1, -1, 0, -1, -1, 1, 0, 1, -1, 1, 1, -1, 0, 1, -1, 1, -1, 1, 1, 1, -1, -1, 1, 1, 1, 0, 0 | One or more of channel numbers 0 to 15 |

EP 4 529 066 A1

18

| Sequence name | Representative sequence (an equivalent sequence with a same length is not listed) | Used channel |
|---|---|---|
| C₇ N=33 | 1, 1, 1, 1, 0, 1, 1, -1, 1, -1, 1, 0, 1, -1, 0, 0, -1, 0, -1, -1, 1, 1, 1, 0, -1, 1, 0, -1, 1, 1, -1, -1, 0 | One or more of channel numbers 0 to 15 |
| C₈ N=57 | 1, 1, 1, 1, 1, -1, 1, 0, -1, 1, -1, 0, -1, -1, -1, 1, -1, -1, 0, 1, -1, 1, 1, - 1, - 1, 1, 1, 0, - 1, 1, - 1, 0, 0, 1, 0, 1, 1, 1, 1, -1, -1, -1, 1, 1, 0, 1, , 1, -1, -1, -1, 1, 1, -1, 1, -1 | One or more of channel numbers 0 to 15 |
| C₉ N=78 | 1 0 -1 0 0 1 -1 0 0 -1 0 1 1 0 0 1 0 0 1 0 -1 0 0 -1 1 0 -1 0 0 0 0 0 1 1 0 -1 -1 0 -1 1 0 1 0 0 -1 -1 0 0 -1 0 -1 1 0 0 1 0 0 1 0 1 0 0 1 1 0 1 0 0 0 0 0 -1 1 0 1 -1 0 1 | One or more of channel numbers 0 to 15 |
| C₁₀ N=186 | 1 0 -1 1 0 0 1 0 1 1 0 0 0 0 -1 1 0 1 -1 0 0 1 0 -1 0 0 0 0 0 0 0 0 1 0 0 0 0 -1 -1 0 -1 0 0 0 1 0 0 1 0 1 0 1 0 0 0 -1 0 0 0 0 -1 0 0 -1 0 0 1 0 0 -1 1 0 1 -1 0 0 0 0 1 0 0 1 -1 0 1 0 1 0 0 0 0 0 0 -1 0 0 1 0 1 1 0 0 1 0 -1 1 0 0 0 0 1 1 0 -1 -1 0 0 1 0 1 0 0 0 0 0 0 0 1 0 0 0 0 1 -1 0 1 0 0 0 1 0 0 1 0 -1 0 0 0 -1 0 0 0 0 1 0 0 1 0 0 -1 0 0 1 1 0 -1 -1 0 0 0 0 -1 0 0 -1 -1 0 -1 0 -1 0 0 0 0 0 0 -1 0 0 | One or more of channel numbers 0 to 15 |
| C₁₁ N=186 | 1 0 -1 1 0 -1 0 0 1 -1 0 1 -1 0 -1 -1 0 1 -1 0 1 1 0 1 -1 0 -1 1 0 0 0 0 0 1 0 1 -1 0 1 -1 0 0 1 0 -1 1 0 0 1 0 -1 -1 0 1 1 0 1 1 0 1 0 0 -1 0 0 1 1 0 0 -1 0 -1 0 0 1 1 0 -1 0 0 1 1 0 1 1 0 1 -1 0 1 1 0 0 -1 -1 0 -1 -1 0 1 -1 0 -1 0 -1 0 -1 1 0 -1 -1 0 1 1 0 0 0 0 0 1 0 -1 -1 0 -1 -1 0 0 1 0 1 1 0 0 1 0 1 -1 0 -1 1 0 -1 1 0 -1 0 1 0 0 -1 1 0 0 -1 0 1 0 0 -1 1 0 1 0 0 -1 1 0 -1 1 0 -1 0 -1 0 -1 1 0 0 | One or more of channel numbers 0 to 15 |
| C₁₂ N=273 | 1 0 1 0 0 -1 -1 0 0 0 1 1 1 -1 0 0 0 0 0 1 -1 0 -1 -1 1 -1 0 0 0 0 -1 -1 1 0 0 0 1 -1 0 0 -1 0 0 1 -1 1 0 -1 0 1 0 -1 0 1 0 0 -1 -1 0 1 1 1 1 1 0 1 0 0 0 -1 0 0 -1 -1 1 0 0 0 -1 0 0 -1 -1 1 0 0 0 0 1 1 0 0 -1 1 0 -1 -1 -1 1 0 0 0 0 0 1 1 0 0 -1 1 0 -1 0 -1 1 1 0 0 0 0 -1 0 -1 0 -1 -1 1 1 1 1 0 1 0 0 0 1 1 0 1 0 0 1 -1 0 -1 0 0 1 -1 1 0 1 1 0 1 0 0 1 0 0 0 1 0 0 1 -1 1 1 1 0 1 0 1 0 1 0 1 -1 1 -1 0 0 1 0 0 -1 1 1 0 -1 -1 1 -1 1 1 0 1 0 0 1 -1 -1 0 0 -1 -1 0 -1 0 1 0 1 0 0 1 -1 -1 0 0 -1 0 -1 1 0 -1 0 0 1 1 0 0 1 -1 1 1 0 -1 0 0 1 0 -1 0 -1 0 -1 1 0 0 1 0 0 0 0 1 -1 1 0 -1 1 1 1 0 1 0 -1 0 0 -1 0 0 0 1 0 -1 -1 | One or more of channel numbers 0 to 15 |

| Sequence name | Representative sequence (an equivalent sequence with a same length is not listed) | Used channel |
|---|---|---|
| $C_{13}$ N=403 | 1 0 1 0 0 0 -1 1 0 -1 1 0 0 0 0 1 0 0 -1 1 0 0 1 0 0 0 0 -1 0 0 1 0 1 0 0 0 1 1 -1 0 -1 0 0 0 -1 1 0 -1 1 -1 0 1 0 -1 0 0 0 0 -1 0 0 -1 0 1 1 0 0 0 0 -1 -1 -1 0 0 1 1 0 0 -1 0 0 1 0 -1 0 0 0 0 -1 0 0 1 0 0 1 0 0 0 -1 1 1 -1 0 0 0 0 0 0 -1 1 0 0 -1 0 -1 0 0 0 0 0 0 1 0 -1 -1 0 1 0 -1 0 0 0 0 0 0 -1 0 1 -1 -1 0 1 0 0 0 0 0 0 1 0 0 1 0 0 1 0 0 1 -1 -1 0 1 0 0 0 1 0 0 0 -1 0 1 0 1 0 0 0 0 0 0 0 0 -1 1 0 0 -1 1 -1 1 0 0 0 0 1 -1 0 0 1 1 0 1 0 0 0 0 0 1 0 0 -1 0 1 1 0 0 1 0 0 1 1 0 0 0 -1 1 0 1 0 -1 0 0 0 1 0 0 0 0 -1 0 0 0 0 0 0 0 1 0 1 -1 -1 0 0 0 1 0 0 1 1 -1 0 -1 0 -1 0 0 0 0 0 0 -1 0 0 -1 0 0 1 1 0 1 0 0 0 0 1 1 0 0 -1 -1 -1 -1 0 0 0 0 0 0 0 0 0 1 0 1 0 0 0 0 1 1 1 0 0 0 0 1 1 0 1 0 0 0 -1 0 0 0 0 0 -1 0 0 0 0 1 -1 0 0 -1 -1 -1 1 -1 0 0 0 0 1 0 1 0 1 0 1 0 -1 0 0 0 -1 0 0 0 0 -1 1 0 0 0 1 0 0 -1 0 0 0 -1 -1 0 1 -1 1 0 0 0 0 -1 0 0 0 0 1 0 0 | One or more of channel numbers 0 to 15 |
| $C_{14}$ N=403 | 1 0 1 0 0 -1 -1 0 1 0 1 -1 1 0 -1 0 0 -1 -1 -1 0 -1 -1 -1 -1 1 0 1 0 0 1 0 1 0 -1 1 0 -1 -1 0 0 0 0 1 -1 -1 0 -1 1 1 -1 1 0 1 0 0 1 -1 1 0 0 -1 0 1 1 0 -1 0 0 -1 1 0 0 1 -1 1 0 0 1 -1 -1 0 -1 0 0 1 -1 1 1 0 1 0 0 1 -1 0 1 1 -1 0 1 0 1 0 0 0 -1 -1 0 1 -1 1 1 -1 0 1 0 0 0 0 1 0 -1 -1 1 -1 0 0 -1 0 0 1 1 0 1 0 1 -1 1 0 1 0 0 -1 1 1 0 -1 0 0 1 0 1 0 0 1 0 0 0 1 -1 0 0 -1 -1 1 1 0 0 0 1 1 1 0 -1 1 -1 1 1 1 0 0 0 0 0 -1 1 0 1 0 -1 -1 -1 0 1 0 0 1 1 0 0 1 -1 -1 -1 1 0 -1 0 0 1 -1 0 0 -1 0 1 1 1 0 0 0 0 -1 0 1 1 1 0 0 -1 0 1 0 1 1 0 0 0 0 -1 0 1 0 1 0 0 1 -1 -1 1 0 -1 -1 1 0 1 0 1 0 0 1 -1 -1 0 -1 -1 1 0 0 0 0 0 1 1 0 0 1 1 0 1 -1 0 1 0 0 1 1 0 -1 -1 -1 -1 0 1 0 0 0 -1 0 0 -1 -1 -1 0 -1 0 -1 0 0 -1 -1 1 0 -1 -1 1 -1 -1 0 1 0 0 -1 -1 1 0 0 0 1 0 1 0 1 0 0 -1 -1 0 -1 1 1 1 -1 0 1 0 0 -1 -1 1 0 1 1 1 1 1 1 0 0 0 0 1 -1 1 0 0 1 -1 1 -1 -1 0 0 -1 0 0 -1 0 1 0 -1 1 1 1 1 0 -1 0 0 1 0 0 0 1 -1 1 0 -1 0 -1 0 0 1 1 -1 0 -1 -1 0 0 | One or more of channel numbers 0 to 15 |
| $C_{15}$ N=429 | 1 0 1 0 0 1 -1 -1 0 1 -1 0 1 -1 0 0 0 0 -1 1 1 0 -1 0 -1 1 0 0 1 0 0 -1 0 1 0 -1 0 1 1 0 1 0 0 0 -1 -1 0 0 1 0 -1 -1 0 1 0 0 -1 -1 0 0 -1 -1 -1 -1 0 0 1 0 0 0 -1 1 0 -1 1 1 0 1 0 0 0 0 1 -1 0 -1 -1 0 -1 1 0 -1 0 0 -1 1 0 0 -1 -1 1 0 1 0 -1 0 0 1 0 1 0 0 0 -1 0 -1 0 1 0 0 0 1 1 0 1 -1 1 -1 -1 0 1 0 0 1 0 1 0 1 -1 -1 0 0 -1 0 0 -1 0 -1 0 -1 0 -1 1 0 -1 0 0 0 0 1 1 -1 0 -1 -1 1 1 1 0 0 1 0 0 -1 -1 0 0 1 0 0 -1 0 0 -1 0 0 -1 0 0 1 0 -1 0 0 1 1 1 -1 0 0 0 0 1 -1 0 -1 1 1 -1 1 0 1 0 0 0 1 0 0 1 -1 1 1 0 0 1 0 0 1 -1 -1 0 0 -1 1 1 1 0 1 0 0 1 1 1 0 -1 1 0 0 -1 0 -1 0 0 1 -1 0 0 -1 0 -1 1 1 0 -1 0 0 1 1 -1 0 -1 -1 -1 1 -1 0 0 0 0 0 0 -1 0 1 1 1 1 1 0 -1 0 -1 -1 1 0 1 0 1 1 1 0 0 0 0 -1 -1 -1 0 0 -1 -1 0 0 0 0 0 1 -1 1 0 1 -1 0 -1 1 0 -1 0 0 1 -1 1 0 0 -1 1 -1 1 0 1 0 0 -1 0 0 0 0 1 -1 1 1 0 0 0 0 0 1 0 1 1 0 1 1 0 1 0 0 1 1 1 0 -1 0 1 -1 0 0 -1 0 0 -1 -1 1 1 0 0 1 1 0 -1 0 1 0 0 0 -1 1 0 -1 0 1 1 -1 0 -1 0 0 1 0 0 1 0 -1 -1 0 1 0 0 1 0 -1 0 -1 1 -1 0 | One or more of channel numbers 0 to 15 |
| $C_{16}$ N=546 | 1 1 1 -1 0 -1 0 0 1 0 0 -1 0 0 0 0 -1 0 0 0 0 0 0 0 -1 1 0 -1 0 -1 0 0 -1 0 0 -1 0 0 0 0 0 1 0 0 0 0 0 0 0 1 0 0 0 0 0 0 -1 1 1 1 0 0 0 0 0 1 0 -1 0 0 0 0 1 0 0 0 0 1 0 0 0 0 0 0 0 0 1 -1 0 0 -1 0 0 1 -1 0 1 0 1 0 0 0 0 0 0 0 0 0 0 -1 1 1 -1 0 1 0 0 0 -1 0 0 1 0 0 0 0 0 0 0 0 0 0 0 -1 1 1 -1 0 0 0 0 1 0 0 0 0 0 0 0 1 0 0 0 0 0 0 0 0 -1 1 -1 0 0 0 -1 0 0 1 0 0 1 -1 0 1 0 -1 0 0 0 0 -1 0 0 0 0 0 0 0 -1 -1 1 -1 0 1 0 0 1 0 0 0 0 0 0 0 0 0 0 0 0 0 0 0 0 1 1 -1 0 1 0 0 1 -1 0 0 0 0 0 0 0 -1 0 0 0 0 0 0 0 1 0 -1 0 0 1 1 0 1 0 0 0 0 0 1 0 0 0 0 0 0 0 0 -1 0 0 -1 0 0 0 0 1 -1 0 -1 0 0 0 0 0 0 0 0 0 0 0 0 0 0 -1 -1 -1 0 1 0 0 -1 -1 0 1 0 1 0 0 0 0 0 0 0 1 1 1 1 0 0 0 0 -1 0 1 0 0 0 0 1 0 0 0 0 0 0 0 0 0 -1 -1 1 0 1 0 0 1 0 -1 0 0 0 0 0 0 0 0 0 1 1 1 0 0 0 0 -1 1 0 0 0 1 0 0 -1 0 0 0 0 0 0 0 0 0 0 0 0 0 0 1 0 1 0 1 0 0 0 -1 0 0 0 0 0 0 0 1 0 0 0 0 0 0 0 1 -1 0 0 0 -1 0 0 -1 -1 0 -1 0 0 0 0 1 0 0 0 0 0 0 0 0 -1 1 1 0 1 0 0 1 1 0 0 0 0 0 0 0 -1 0 0 0 0 0 0 0 1 1 1 -1 0 1 0 0 0 1 0 -1 0 0 0 0 0 0 0 0 0 0 0 0 0 0 1 0 1 0 0 1 0 0 0 0 1 0 0 0 0 0 0 0 0 1 1 -1 0 0 1 0 0 -1 1 0 -1 0 0 0 0 0 0 0 0 0 0 0 0 0 1 -1 0 1 0 1 0 1 -1 0 -1 0 0 0 0 0 1 0 0 0 0 0 0 0 0 | One or more of channel numbers 0 to 15 |
| $C_{17}$ N=651 | 1 0 1 0 0 1 0 -1 0 1 0 0 0 0 0 0 -1 0 1 0 1 0 -1 0 0 0 0 0 0 0 -1 0 1 -1 0 1 -1 0 -1 1 0 0 0 1 1 0 1 0 -1 0 -1 0 -1 0 -1 0 0 0 0 1 0 0 -1 0 1 0 1 1 0 0 -1 1 0 1 0 0 0 -1 0 0 1 1 0 0 -1 0 -1 0 0 0 0 -1 0 0 0 0 1 1 0 0 1 1 0 1 0 0 0 1 1 0 -1 -1 0 0 0 0 -1 0 0 0 0 -1 0 0 -1 0 1 1 0 0 1 -1 -1 0 -1 0 0 1 -1 0 0 -1 1 0 -1 0 -1 0 -1 0 0 0 1 0 0 0 1 0 0 1 0 -1 1 0 0 0 -1 -1 0 0 0 -1 0 0 0 0 1 0 1 1 -1 0 1 0 1 0 0 0 0 0 0 0 -1 1 0 0 1 1 1 1 0 0 0 0 1 1 0 0 0 -1 0 0 0 1 0 0 0 0 -1 0 0 0 0 0 -1 0 0 -1 0 0 1 1 0 0 0 1 1 0 1 0 1 -1 1 0 0 0 0 0 0 0 0 -1 0 -1 -1 0 0 1 1 -1 -1 -1 1 0 0 0 -1 1 0 -1 0 0 -1 0 1 0 0 0 0 -1 0 0 1 0 1 0 0 0 1 -1 0 0 -1 0 0 0 -1 1 0 1 -1 -1 0 1 0 -1 0 0 0 0 0 1 0 0 1 1 -1 1 1 1 0 0 0 0 -1 0 1 1 0 0 1 0 0 0 0 0 0 -1 0 0 -1 0 0 1 0 0 1 1 0 0 0 0 0 -1 -1 0 1 -1 -1 0 -1 0 0 0 0 0 0 -1 0 0 0 0 -1 0 0 1 1 -1 1 1 -1 0 0 0 1 0 0 1 -1 1 1 0 0 0 1 0 0 1 0 0 0 0 -1 0 1 0 1 0 0 0 -1 1 -1 -1 0 0 0 0 -1 0 1 -1 -1 0 1 0 1 0 -1 0 0 0 0 -1 0 0 0 -1 0 0 0 0 1 -1 0 0 -1 1 -1 1 1 -1 0 0 0 1 0 -1 -1 -1 0 0 0 -1 0 0 0 0 -1 0 0 1 0 -1 1 1 0 0 1 0 0 -1 -1 1 -1 0 -1 0 0 1 -1 0 0 1 0 0 0 0 0 1 0 1 0 1 -1 0 0 1 0 1 0 1 1 -1 0 0 0 1 -1 0 -1 1 -1 0 1 0 -1 0 0 0 0 0 0 1 0 0 0 0 0 -1 1 1 -1 0 0 0 -1 1 0 1 0 1 0 1 0 0 0 0 1 0 0 1 0 1 1 0 0 0 1 0 -1 -1 0 0 0 1 0 0 1 1 0 1 0 -1 0 0 0 -1 0 0 1 0 -1 0 0 0 -1 0 1 -1 -1 1 0 0 0 1 -1 0 0 -1 0 0 1 0 1 0 1 0 0 0 0 0 0 | One or more of channel numbers 0 to 15 |

| Sequence name | Representative sequence (an equivalent sequence with a same length is not listed) | Used channel |
|---|---|---|
| C₁₈ N=651 | 1 0 1 1 1 1 0 0-1 0 0 1-1-1 0 0 0-1 -1 1 1 1 1-1-1-1 1 0 0 0-1 0 1-1 0 0 0 1 0 1 0 1-1 1 1-1 0 1 0 1 0 -1 1 1 1 0 1-1 0 0 -1 0 1 1 1-1 0-1 0-1 0-1-1 1-1 0 0 1 1 0 1-1 1-1-1-1 1 0 0 0 1 1-1 0 0-1 1 0 0 -1 -1 1 -1 0-1 -1 0-1 0 -1 1-1 1 0 0 1 0 0-1 0 1 1 1-1 0 1-1 0 0 0 1 1 1 1 0-1 -1 0 -1 -1 1-1-1 1 1-1 0 0 1 0-1 1 1 1 0 0-1 1 0-1 1 1 1-1 0 1 1 1 0 1 0 -1 -1 -1 -1 0 0 0 0 0 -1 1 1-1 0 -1 1-1 0 1 0-1 1-1 0 0 0 1 1 0-1-1-1-1 1 1 1 0 0 0 0-1 1-1 0 0 0-1 0 0 1-1 1-1 0 1-1-1-1 0 1 0 1-1 1-1 0 0 0 -1 0-1 -1 1-1 0-1-1 1 0 0-1 0 -1 -1 0-1 0 0-1 0 -1 1-1 1 1 1 0 1 0 1 0 -1 -1 0 1 0 0 0-1 0-1-1-1 0 1 -1 1 1 1 1 0 1 0 1 1 1-1 0 0 1 0 0-1-1-1 0-1-1-1 0 1 0 1 0 1 0 1 1 0 0 1-1 0 1 1 1 1 0 0-1 0 0 1 0 1 0-1 1 0 0 1 1 0-1 1 0 1-1 1-1-1-1 1 1 0-1 0-1 1 1 0 0 0 0-1 0-1 1 0-1-1-1 0-1-1 0 1 0 0 1-1 0 0 1-1 0 1-1 1 1 1 0 1 0 1 0 1 0 0-1 -1 1 0 0 -1 -1 0 1 0 1-1 1 -1 -1 -1 1 0-1 0-1 0 0 0 0 1-1 0 1 0-1-1-1 0 1 1 1 0-1 0 -1 -1 1 1 1 0 0 1 1 0-1 -1 1 0 1 0-1 1 0-1 0 1-1-1 0 0 0 1-1 0 0-1-1-1-1-1 1 0 1 0-1 0 0-1 0 0 1-1 0 0 1-1 0 0 1-1-1 0 1-1-1 1 0 0 0 1 1-1-1 0 0-1 1 0-1 0-1-1 0 0 1 0 1-1 1 1 0 0 1-1 0-1 0 1 0 0 1 1 0-1 1 1-1 1 1 1 1-1 0 1 0 0 0 1 0 0 0 1 1 0 1 1-1 0-1 0-1 1-1-1 0 0-1 0-1 0-1 0 1 0 1 1-1-1 0-1 0 1 0 1 1 0 0-1 0 0 1-1 -1 1 1 1 1-1 1 1 0 1 0 0 1 0-1 0 0-1 0 0 1 1 0 1-1 1 1 1 1 0 0-1 0 1 1 1-1 0 0 1-1 0 0 0 | One or more of channel numbers 0 to 15 |
| C₁₉ N=741 | 1 0 1 0-1 -1 0 0-1 1 0 -1 1 0 1 0 0 0 -1 -1 0 -1 1-1 1 1 1 0-1 0 0 1 0 0 0 0 -1 1 1 1 1 0-1 0 0 1 0 1 0-1 0 -1 1-1-1 1 1 0-1 0 0 1-1 1 0-1 1 1 0-1 1 1 0 -1 0-1 0 0-1 1 1 0 1 0 1-1 1 0-1 0 0 1 0-1 1-1 0 0 1 0 1 0 0 1 1-1 0 -1 -1 0 1 1 0-1 0 0 1-1-1 0 1 1-1 1 1 1 1 0-1 0 0-1-1-1 0 1 1-1-1 1 0 0 0 0 1-1-1-1 0-1-1 0-1 1 0 1 0 0 1 0 1 0-1-1-1-1-1 0 1 0 0 1-1-1 0 1-1 0 1-1 1-1 1 0 1 0 0 1-1-1 0 0 1 1-1 0 0-1 0 0-1 1 0 0 1-1 1-1-1 0 1 0 0 1 1 1 0 0-1 0 1 1 0 1 0 0-1 -1 0-1 1 1-1-1-1-1 0 1 0 0 1 1 1 0-1 1 1-1 1 1 0-1 0 0 0 1-1 0-1 1-1 0 1 0 1 0 0-1-1 0 1-1 1-1 1 0 0 1 0 0 1-1 1 0 1 1 1 1 0 0 1 0 0-1 1 1 0 1-1-1 1 0 1 0 0 1 0-1 0 1 0-1-1 1 0-1 0 0 1 1 1 0 1 1 1 1 0 0 1 0 0 0 0 1 0-1-1 1 1-1 0-1 0 0 0-1 1 0 1 1-1 1 1 0 1 0 0 1-1 1 0 1-1 0-1 1 0 0 0 0-1 -1 -1 0 0-1-1 1 1 1 0-1 0 0 0 1 1-1 0-1-1-1 1 1-1 0 1 0 0 1 1 0 1-1 0-1 0 1 1 1 0-1 0 0 1 1 1 0 1 0 0 1 1 0 0 1 1 1-1 1 0 1 0 0 1 1-1 0-1 0-1 0 0-1 0 1 0-1-1-1-1 1 0 0 0 0-1 -1 0 0-1 0 1 1 1 0-1 0 0 1-1 0 0-1-1-1-1 0 1 0 0-1-1 1 0-1-1-1 1 0 0 1 0 0-1 1-1 0 1 1 0 1-1 0 1 0 0-1 1 1 0 0 0 0 0 1-1-1 0 1-1 1 0 1 0 1 0 0-1 1 1 0-1 1 1 1 1 0 1 0 0 0 1 1 0 0 1 1-1 1 0-1 0 0-1 -1 0 1-1 1 0-1 0-1 -1 0 0 0 1 0 1 0 1 0 0-1-1-1-1 1 0 0 0 1 0 1 0 1 0 0-1 1 1 0 0-1 1 1-1 0 -1 0 0 -1 -1-1 0-1-1 1 1-1 0 0 0-1 0-1 0 1 -1-1-1 0 0-1 0 0 -1 1 1 1 0 0 1 1-1 1 1 0 0 0 0 1-1 1 0 1 1-1 1 1 1 0 1 0 -1 1 -1 0-1 1 1 -1 | One or more of channel numbers 0 to 15 |
| C₂₀ N=806 | 1 0 1-1 0 0 0 0 -1 -1 0 0 0 0 0 0 1 0 0 0 0 0 0 0 0 0-1 0 0 1 0 1 0 0-1 0 0 0 0 0 0 0 0 0 0 0 0 0 1 0-1 0 0 0 0 0 0 0 0 0 0 0 0 0 1 0 0 0 0 0 0 0 0 1-1 1 0 1 0 0 0 0 0 0 0 0 0 1 0 0 0 0 0 0 0 0 0-1 0 0 0-1 0 0 0 0 0 0-1 0 0 0 0 0 0 0 0 1 1 -1 -1 0 0 0 0 1-1 0-1 0 0 0 0 0-1 0 0 0 0 0 0 0 0 1 1 0 0 1 0 0 1 1 0 0 0 0 0 0 0-1 0 0 0 0 0 0 0-1 0 0 0 0 0 0 0-1 0 0 0 0 0 0 0 0 0 0 0-1 0 0 0 0 0-1 -1 0 0 0 0 0-1 0 0 0 0 0 0 0 0 1-1-1 0 0 0 0 0 0 1 0 0 0 0 1 0 0 0 0 0 0 0 1-1 0 1 0 0 0-1 0 1 0 0 0 0 0 0 0 0 0 0 0 1-1 1 1 0 0 0 0 1 0 0 1 0 0 0 0 0 0 0 0 0 0 0 0 1 1 0 0 0 1 0 0-1 0 0 0 0 0 0 0-1 0 0 0 0 0-1 0 0-1 0 1 0 0 0-1 0 1 0 0 0 0 1 0 0 0 0 0 0 0 0-1 0 0 0-1 0 0 1 0 0-1 0 0 0 0 0 1 0 0 0 0 0 0 0 0 -1 1 0-1 0-1 0 0 0 0 0 0 0 0 0 0 0 0 0 0 0 0 0 0 0 0 0 1 1 0 0-1 0 1 0 0 0 0 0 0 0 0 0 0 0 0 0 0-1 1-1 0 0 0 0 0-1 0 1 0 0 0 0 0 0 0 0 0 0 0 0 0 0 1 0 0-1 0-1 0 0 0 0 0-1 0 0 0 0 0 0 0 0 0 0 0 0 0 1 0 0 1 0 0 1-1 0-1 0 0 0 0 0 1 0 0 0 0 0 0 0 0 0 0 0 0 0 0-1 0 0 0 0 0 0-1 0 0 0 0 0 0-1 0 1 0 0 0 0 0 1 0 0 0 0 0 0 0 0 0 0 0 0 0 1 1 0-1 -1 0 0 0 1 0 0 0 0 0 0 0 1 0 0 0 0 0 0 1-1 0 0 0 1 0 0 1 1 0 0 0 0 0 0 0 0 0 0 0 0 0 0 1-1 0 1 0 0 0 0 0-1 0 0 0 0 0 1 0 0 0 0 0 0 0 0 0 1 0-1 0 0 0 0 1 0 1 0 0 0 0 0 0 0 0 0 0 0 0 0 0 0 0 1 0 0 0 1-1 0 0 0 0 0 0 0 0 0 0 0 0 0 0 0 1 0 1 0 0 0 0-1 0 0-1 0 0 0 0 1 0 0 0 0 0 0 0 0 0 0 1 0 1 1 0 0 0-1 0 0 0 0 0 0 0 0 0 0 0 0 0 0 0-1 0 0 0-1 0 0 0-1 0 0 0 0 1 0 0 0 0 0 0 0 0 0 0 1 0 1 1 0 0 0 0-1 0 0 0 0 0 0 0 0 0 0 0 0-1 0 0 0 0 1 0 0-1 1 0-1 0 0 0 0 0 0 0 0 0 0 0 0 0 0 1 1 1 0-1 0 0 0-1 0 0 0-1 0 0 0 0 0 0 0 0 0 0 0 0 0 0 0 | One or more of channel numbers 0 to 15 |

EP 4 529 066 A1

(continued)

| Sequence name | Representative sequence (an equivalent sequence with a same length is not listed) | Used channel |
|---|---|---|
| C$_{21}$ N=806 | 1 0 1 -1 0 -1 0 0 -1 1 0 -1 0 0 0 0 1 0 0 0 0 0 0 0 1 1 1 0 0 1 0 0 1 -1 0 0 0 0 0 0 0 -1 0 0 0 0 0 0 1 1 1 1 0 1 0 0 0 0 0 0 0 0 0 -1 0 0 0 0 0 0 0 1 -1 -1 0 1 0 0 -1 1 0 -1 0 0 0 0 1 0 0 0 0 0 0 0 1 -1 1 -1 0 0 0 0 1 1 0 -1 0 0 0 0 1 0 0 0 0 0 0 0 -1 -1 1 0 1 0 1 1 0 -1 0 0 0 0 1 0 0 0 0 0 0 0 1 1 -1 0 0 0 0 -1 0 0 1 0 0 0 0 0 -1 0 0 0 0 0 0 1 1 0 0 0 0 1 1 0 1 0 0 0 0 0 1 0 0 0 0 0 0 1 1 -1 1 0 1 0 0 -1 0 -1 0 0 0 0 0 -1 0 0 0 0 0 0 0 1 -1 1 1 0 1 0 0 -1 1 0 -1 0 0 0 0 0 1 0 0 0 0 0 0 -1 1 1 1 0 1 0 0 -1 -1 0 -1 0 0 0 0 0 0 0 0 0 0 0 -1 -1 -1 0 0 -1 0 0 -1 0 0 1 0 0 0 0 -1 0 0 0 0 0 0 1 1 1 1 0 -1 0 0 0 -1 0 0 -1 0 -1 0 0 0 0 1 0 0 0 0 0 0 0 1 0 0 -1 0 1 0 0 -1 0 0 1 0 0 0 0 0 1 0 0 0 0 0 0 0 0 1 -1 -1 1 0 1 0 1 0 0 -1 0 0 0 0 0 -1 0 0 0 0 0 0 0 -1 1 -1 -1 0 1 0 0 1 -1 0 0 0 0 0 0 0 1 0 0 0 0 0 0 1 1 -1 0 0 -1 0 0 1 -1 0 1 0 0 0 0 0 0 0 0 0 0 0 -1 -1 0 -1 0 1 0 0 0 -1 0 -1 0 0 0 0 0 -1 0 0 0 0 0 0 1 1 -1 0 0 -1 0 0 1 1 0 -1 0 0 0 0 0 -1 0 0 0 0 0 0 0 0 1 0 0 1 0 0 1 0 1 0 0 0 0 -1 0 0 0 0 0 0 -1 -1 1 -1 -1 0 0 0 0 -1 -1 0 0 0 0 0 0 0 0 0 1 -1 1 -1 0 1 0 0 1 -1 0 0 0 0 0 0 -1 0 0 0 0 0 0 0 1 -1 0 -1 0 1 0 0 1 -1 0 1 0 0 0 0 0 1 0 0 0 0 0 0 0 -1 0 1 1 0 1 0 1 1 0 1 0 0 0 0 0 1 0 0 0 0 0 0 0 1 -1 0 1 0 -1 0 0 -1 -1 0 1 0 0 0 0 0 1 0 0 0 0 0 0 0 0 0 0 1 0 -1 0 1 0 0 -1 1 0 0 0 0 0 0 0 0 0 0 0 0 0 0 -1 1 1 -1 0 0 0 1 -1 0 1 0 1 0 0 0 0 0 1 0 0 0 0 0 0 0 -1 1 1 -1 0 -1 0 0 1 0 0 -1 0 0 0 0 0 0 0 0 0 0 0 0 0 -1 0 -1 1 0 0 0 1 1 0 -1 0 0 0 0 0 0 0 0 0 0 0 0 0 1 -1 1 0 -1 0 0 -1 0 0 -1 -1 0 -1 0 0 0 0 0 1 0 0 0 0 0 0 0 -1 0 -1 1 0 0 0 1 -1 0 0 0 0 0 0 0 0 1 0 0 0 0 0 0 0 | One or more of channel numbers 0 to 15 |
| C$_{22}$ N=858 | 1 1 1 -1 0 1 0 0 1 1 0 0 0 0 0 0 0 0 0 0 0 0 0 0 -1 1 -1 0 -1 0 0 1 -1 0 0 0 0 0 0 1 0 0 0 0 0 0 0 -1 1 1 -1 0 -1 0 -1 -1 -1 0 1 0 0 0 0 1 0 0 0 0 0 0 1 -1 0 0 0 0 0 0 1 -1 0 0 0 0 0 0 1 0 0 0 0 0 0 1 1 -1 -1 0 1 0 0 -1 0 1 0 0 0 0 0 1 0 0 0 0 0 0 0 -1 0 1 -1 0 1 0 0 1 0 1 0 0 0 0 0 0 0 0 0 0 0 -1 1 0 1 0 1 0 0 0 -1 0 -1 0 -1 0 0 0 0 1 0 0 0 0 0 0 0 0 -1 1 -1 0 1 0 0 1 0 0 -1 0 0 0 0 1 0 0 0 0 0 0 0 1 0 1 1 0 0 0 0 -1 1 0 -1 0 -1 0 0 0 0 -1 0 0 0 0 0 0 0 1 0 1 -1 0 1 0 0 0 -1 0 0 0 0 0 0 1 0 0 0 0 0 0 1 -1 -1 0 0 1 0 0 0 -1 0 1 0 0 0 0 0 -1 0 0 0 0 0 0 1 0 -1 -1 0 -1 0 0 -1 1 0 -1 0 0 0 0 0 1 0 0 0 0 0 0 0 -1 0 1 0 1 0 1 0 0 0 1 0 0 0 0 0 0 0 0 0 0 0 0 0 0 0 1 -1 1 0 0 -1 0 0 -1 0 0 1 0 0 0 0 0 1 0 0 0 0 0 0 0 0 0 1 1 1 0 0 1 0 0 -1 -1 0 -1 0 0 0 0 0 -1 0 0 0 0 0 0 -1 1 1 1 1 0 0 0 0 1 -1 0 -1 0 0 0 0 0 0 0 0 0 0 0 1 1 1 0 0 1 0 0 1 -1 0 1 0 0 0 0 0 0 0 0 0 0 0 0 0 0 -1 0 0 1 0 -1 0 0 1 -1 0 1 0 1 0 0 0 0 -1 0 0 0 0 0 -1 0 0 0 0 0 0 0 1 -1 1 1 0 0 0 0 0 0 0 0 0 0 0 0 0 0 1 1 -1 0 0 0 0 -1 -1 0 -1 0 0 0 0 0 -1 0 0 0 0 0 0 0 1 0 -1 -1 0 -1 0 0 1 -1 0 -1 0 0 0 0 0 -1 0 0 0 0 0 0 0 0 -1 -1 1 1 -1 0 0 0 0 0 1 0 -1 0 0 0 0 0 1 0 0 0 0 0 0 0 0 0 0 0 0 1 -1 0 0 -1 0 0 -1 -1 0 1 0 0 0 0 0 0 0 0 0 0 0 0 -1 1 -1 0 1 0 0 1 -1 0 -1 0 0 0 0 0 0 0 0 0 0 0 0 0 0 -1 1 0 0 1 0 0 -1 0 0 0 0 0 0 0 0 -1 0 -1 1 0 1 0 0 -1 -1 0 1 0 1 0 0 0 0 -1 0 0 0 0 0 0 0 1 1 -1 1 0 1 0 0 1 0 0 -1 0 0 0 0 1 0 0 0 0 0 0 0 0 0 0 0 1 1 0 1 0 0 0 0 0 0 0 0 1 0 0 0 0 0 0 0 -1 0 0 -1 0 0 1 0 0 -1 0 0 0 0 0 -1 0 0 0 0 0 0 0 -1 1 -1 -1 0 1 0 0 0 1 0 1 0 0 0 0 0 -1 0 0 0 0 0 0 0 0 | One or more of channel numbers 0 to 15 |
| C$_{23}$ N=1023 | 1 0 1 1 0 0 1 -1 -1 -1 -1 0 0 0 0 0 0 1 1 0 1 0 0 0 0 0 0 -1 0 0 -1 0 1 1 0 0 0 1 -1 -1 -1 0 0 0 1 -1 0 0 1 0 0 -1 0 -1 0 0 0 0 0 0 0 1 0 -1 0 0 0 1 1 0 1 -1 0 0 0 1 0 0 -1 0 0 0 0 0 1 0 0 0 1 0 0 0 1 0 0 -1 0 1 -1 0 0 1 1 -1 1 0 0 0 0 1 -1 0 0 -1 1 0 0 0 0 0 0 0 -1 0 0 1 0 -1 1 0 0 -1 0 -1 1 -1 0 0 1 -1 0 -1 -1 0 0 -1 0 0 0 0 0 0 -1 0 0 0 1 0 0 0 1 -1 1 0 -1 0 0 0 0 1 0 -1 -1 1 0 0 0 1 0 0 0 0 1 0 0 1 0 0 -1 0 0 -1 1 -1 -1 0 0 0 1 1 0 1 1 0 1 -1 0 -1 0 0 0 0 0 0 0 1 0 0 -1 0 1 1 0 1 0 1 1 -1 0 0 0 1 1 0 1 0 -1 0 -1 0 1 0 0 0 0 0 0 0 -1 1 0 0 0 -1 0 1 0 0 0 -1 0 0 1 1 0 -1 0 -1 0 0 0 1 -1 0 0 -1 1 0 0 -1 -1 0 1 0 -1 0 0 0 -1 0 0 1 0 0 -1 0 0 -1 0 0 -1 1 -1 1 0 0 0 0 -1 1 0 -1 1 0 0 1 0 -1 0 0 0 -1 0 0 0 -1 0 0 0 -1 1 1 -1 0 0 0 1 0 0 1 0 0 1 -1 1 0 0 0 -1 0 0 0 0 -1 0 0 -1 0 0 1 0 0 1 0 0 0 -1 0 1 1 0 0 0 0 0 -1 0 -1 1 0 0 -1 0 0 -1 0 0 0 0 1 1 0 -1 -1 0 0 1 0 1 0 0 0 0 -1 0 0 1 0 -1 1 0 0 0 1 1 0 0 0 0 -1 1 0 1 0 1 0 0 0 -1 0 0 0 0 0 -1 1 0 1 0 1 0 0 0 0 -1 0 0 0 0 1 1 0 0 1 1 1 1 1 0 0 0 -1 0 0 -1 0 1 0 1 0 -1 0 0 0 0 1 0 0 -1 0 0 1 0 0 1 0 -1 1 1 0 0 0 1 0 0 0 1 0 -1 0 -1 0 0 0 0 -1 0 0 1 0 -1 -1 0 0 1 1 -1 0 -1 0 0 0 -1 1 0 1 1 0 0 -1 0 1 0 0 0 0 0 0 0 1 1 0 0 0 1 -1 1 -1 0 0 0 -1 1 0 -1 0 -1 0 0 0 1 0 0 0 0 0 -1 0 0 1 0 0 0 -1 1 0 0 1 1 1 -1 1 0 1 0 -1 0 0 0 0 0 0 1 0 1 0 0 0 0 -1 -1 1 1 1 0 0 0 1 1 0 0 -1 0 -1 0 1 0 -1 0 0 0 0 0 0 1 0 1 1 0 0 -1 1 0 -1 0 -1 0 0 0 0 0 0 1 0 0 1 0 0 0 -1 1 0 0 1 1 0 0 1 -1 0 -1 0 -1 0 0 0 0 -1 0 0 0 0 1 -1 0 0 1 0 -1 0 -1 0 0 0 0 -1 -1 0 1 0 1 -1 0 0 1 0 1 0 0 0 0 0 0 0 1 0 0 1 0 0 1 -1 -1 0 -1 0 0 0 -1 0 0 -1 -1 -1 0 0 0 -1 0 0 0 0 0 1 0 0 1 0 0 | One or more of channel numbers 0 to 15 |

(continued)

| Sequence name | Representative sequence (an equivalent sequence with a same length is not listed) | Used channel |
|---|---|---|
| C₂₄<br>N=1023 | 1 0 1 1 0 -1 0 1 -1 1 0 0 -1 -1 0 0 0 0 1 -1 -1 1 1 0 1 -1 0 -1 1 0 0 -1 0 1 1 1 -1 0 -1 -1 1 0 -1 -1 0 1 1 0 0 1 0 1 -1 1 1 -1 0 -1 1 0 0 0 1 0 -1 0 1 -1 0 -1 0 -1<br>0 -1 -1 -1 1 0 0 -1 0 0 1 0 -1 -1 -1 -1 1 0 -1 0 0 -1 0 1 -1 -1 0 0 -1 -1 -1 0 1 -1 -1 1 1 0 0 -1 -1 0 0 -1 0 1 1 1 1 1 0 0 1 0 -1 1 1 1 1 0 0 -1 -1 0 1 0 1 0 1 1 1 0 -1 -1 0 -1 -1 0<br>0 1 0 -1 -1 1 0 0 0 0 1 0 -1 -1 0 1 1 0 0 1 -1 1 0 -1 0 -1 -1 -1 -1 0 1 -1 0 0 -1 0 -1 0 0 1 0 0 -1 1 0 0 -1 -1 0 0 -1 1 1 -1 0 1 -1 -1 -1 -1 1 0 -1 1 0 0 -1 0 0 -1 0 1 1<br>0 1 0 0 1 -1 0 -1 1 0 1 -1 0 1 0 1 -1 -1 1 1 -1 -1 0 1 -1 0 0 0 0 0 -1 1 1 -1 0 1 -1 0 0 1 -1 -1 -1 0 0 1 -1 1 0 1 1 -1 -1 1 1 1 0 1 0 0 0 0 0 -1 -1 1 0 -1 0 1 0 1 0 0 1 1 1 1 0 0 -1<br>1 -1 1 1 0 1 -1 1 1 -1 1 0 0 -1 0 0 -1 0 1 0 -1 -1 1 0 -1 0 1 0 -1 -1 0 -1 1 0 -1 1 1 1 0 -1 1 -1 1 1 0 0 0 0 -1 0 0 1 0 1 1 -1 0 1 0 -1 1 0 0 1 -1 1 1 0 1 1 -1 1 -1 -1 0 1 1 0 0 -1 0<br>0 1 -1 0 0 1 0 1 0 1 -1 1 1 0 1 0 0 1 1 -1 -1 1 -1 0 1 -1 1 1 1 0 0 0 -1 0 -1 1 0 -1 0 0 0 1 0 -1 1 1 1 -1 0 -1 -1 0 1 1 1 -1 1 1 0 1 1 1 0 0 1 0 -1 1 -1 1 -1 0 -1 1 0 1 1 0 0 1 0<br>1 0 -1 -1 0 -1 1 -1 1 -1 1 0 1 0 0 1 0 1 1 -1 1 -1 0 -1 0 -1 0 0 0 -1 0 1 0 1 -1 1 0 -1 1 0 1 -1 1 -1 1 -1 -1 1 0 0 1 0 1 0 1 -1 0 -1 1 -1 0 1 1 0 0 1 0 -1 1 1 -1 1 0 -1 0 -1 0 -1 1 0<br>0 0 0 1 1 1 0 0 -1 1 -1 0 1 0 1 -1 0 0 -1 0 -1 1 1 1 1 0 1 1 0 -1 0 0 -1 0 0 1 1 -1 0 0 -1 0 1 0 1 1 1 0 -1 0 0 -1 0 -1 1 -1 -1 -1 0 -1 1 0 0 1 0 -1 -1 0 -1 0 -1 0 -1 -1 0 0 1 1<br>1 -1 -1 0 1 1 0 0 -1 0 -1 -1 1 1 1 0 0 0 0 0 0 1 1 -1 1 0 -1 -1 -1 -1 0 0 -1 1 -1 1 -1 0 1 0 1 1 0 0 -1 0 1 -1 1 1 1 0 0 -1 0 0 -1 1 -1 0 1 0 -1 0 1 -1 0 1 -1 0 1 1 1 0 1 -1 0 0 1 0<br>-1 -1 0 0 1 0 -1 1 0 1 0 -1 1 1 1 0 1 -1 1 1 1 0 0 1 1 1 1 1 0 1 1 0 0 -1 0 0 0 1 0 1 0 -1 1 0 1 1 -1 0 -1 0 1 1 -1 0 0 -1 1 1 1 -1 1 1 0 -1 -1 0 0 0 0 -1 0 1 1 1 0 0 -1 0 1 0<br>1 1 -1 0 -1 0 1 -1 0 -1 1 -1 1 -1 1 0 1 -1 0 0 -1 0 -1 1 -1 1 0 0 1 -1 0 -1 1 -1 -1 1 1 0 1 -1 1 1 -1 0 1 1 1 -1 -1 1 1 0 0 0 0 0 -1 0 -1 1 0 -1 0 0 1 0 -1 1 -1 0 -1 0 1 -1 1 1 1<br>0 -1 -1 -1 1 -1 0 0 1 0 0 0 -1 0 0 1 -1 -1 0 0 1 1 0 1 0 1 1 -1 0 1 1 1 -1 0 1 1 -1 0 0 1 0 1 -1 0 0 0 0 1 1 0 1 -1 0 -1 0 -1 1 1 -1 0 1 -1 -1 -1 1 0 1 -1 -1 1 0 1 0 0 1 0 1 0 1 1 0<br>0 1 0 0 -1 -1 1 0 0 1 0 -1 -1 1 -1 -1 0 -1 1 1 1 0 0 1 0 1 -1 1 0 0 1 0 0 0 0 1 -1 1 -1 0 0 1 1 0 -1 1 1 1 1 0 1 1 0 0 0 0 1 -1 1 1 1 0 0 -1 1 0 0 1 0 -1 1 0 1 -1 1 0 1 1 0 -1<br>-1 -1 -1 -1 0 0 0 1 0 0 1 1 1 0 1 -1 0 0 -1 0 0 -1 0 0 -1 1 1 -1 0 -1 1 0 1 1 1 -1 1 0 0 | One or more of channel numbers 0 to 15 |

EP 4 529 066 A1

Table 1 above shows the perfect sequences with the different sequence lengths (for example, N). It may be understood that, when channel quality is relatively poor or a quantity of users is relatively large, the preamble sequence is generated by using the perfect sequence with a larger sequence length N, so that performance of the UWB system can be improved. This is because a larger sequence length N of the perfect sequence leads to a larger quantity of non-zero elements in the perfect sequence, and a larger periodic auto-correlation main lobe amplitude of the generated preamble sequence, that is, a larger ratio of the periodic auto-correlation main lobe amplitude to a side lobe amplitude of the preamble sequence, thereby facilitating identifying a position of an auto-correlation main lobe of the preamble sequence (for example, facilitating determining a time of receiving a ranging signal in a ranging scenario), and thereby improving performance of the UWB system. In addition, in this embodiment of this application, a larger sequence length N of the perfect sequence leads to a larger quantity of users that is supported by the perfect sequence.

However, when channel quality is relatively good, the preamble sequence is generated by using a perfect sequence with a relatively small sequence length N, so that a transmission delay of the preamble sequence can be reduced.

**Embodiment 2**

Description of Embodiment 2 of this application is mainly about a method for generating a new preamble sequence by cyclically shifting a perfect ternary sequence (Perfect Ternary Sequence). Optionally, Embodiment 2 of this application may be implemented in combination with Embodiment 1, or may be implemented separately. This is not limited in this application. When Embodiment 2 of this application is implemented in combination with Embodiment 1, Embodiment 1 is executed before Embodiment 2 of this application. For specific content, refer to the following descriptions.

Optionally, a UWB-based PPDU transmission method provided in this embodiment of this application may be applied to a scenario of ranging, positioning, sensing, or the like between one node and another node, may be applied to a scenario of ranging, positioning, sensing, or the like between one node and a plurality of nodes, or may be applied to a scenario of ranging, positioning, sensing, or the like between a plurality of nodes and a plurality of other nodes. This is not limited in embodiments of this application.

FIG. 12 is a schematic flowchart of a UWB-based PPDU transmission method according to an embodiment of this application. A third communication apparatus and a fourth communication apparatus in the method may be any two devices that may perform data transmission in FIG. 1 or

FIG. 2. As shown in FIG. 12, the UWB-based PPDU transmission method includes but is not limited to the following steps:

S201: The third communication apparatus generates a PPDU, where the PPDU includes a preamble sequence, the preamble sequence is generated after a target sequence in a sequence set is cyclically shifted, and a periodic auto-correlation side lobe amplitude of any sequence in the sequence set is 0.

S202: The third communication apparatus sends the PPDU.

Correspondingly, the fourth communication apparatus receives the PPDU.

S203: The fourth communication apparatus processes the PPDU.

Optionally, the preamble sequence may be carried in a synchronization (SYNC) field of the PPDU. For a specific carrying manner, refer to FIG. 4 above. This is not described herein. In this embodiment of this application, a frame structure of the PPDU may include only the synchronization (SYNC) field, and may optionally include a start-frame-delimiter (SFD) field. The frame structure of the PPDU in this embodiment of this application may alternatively be any frame structure shown in FIG. 3. This is not limited in embodiments of this application.

Optionally, the preamble sequence is obtained after the target sequence in the sequence set is cyclically shifted, or the preamble sequence is obtained after the target sequence in the sequence set is cyclically shifted and is then repeated once or more. The periodic auto-correlation side lobe amplitude of any sequence in the sequence set is 0. For specific content of the sequence set, refer to the related descriptions in Embodiment 1. Details are not provided in detail herein. For example, the sequence set in this embodiment of this application may include some or all of the sequences in the foregoing Table 1.

In a possible implementation, at least one of the target sequence and a quantity of cyclic shift positions may be determined by the third communication apparatus and the fourth communication apparatus through negotiation. An unnegotiated part of the target sequence and the quantity of cyclic shift positions may be determined through configuration by a coordinator or in another manner. This is not limited in embodiments of this application. For example, there are two manners of negotiating about the target sequence. In one example, the third communication apparatus and the fourth communication apparatus may determine the target sequence by negotiating about a sequence index, and then cyclically shift the target sequence to generate the preamble sequence. In the other example, if there is only one sequence with a same length in the sequence set, the third communication apparatus and the fourth communication apparatus may further determine the target sequence by negotiating about a sequence length, and then cyclically shift the target sequence to generate the preamble sequence. In another possible implementation, the target sequence may be configured by the PAN coordinator (coordinator) shown in FIG. 1 or FIG. 2 to the third communication apparatus and the fourth communication apparatus. For a specific configuration manner, refer to the related descriptions in Embodiment 1. This is not described herein. An unconfigured part of the target sequence and the quantity of cyclic shift positions may be determined by the third communication apparatus and the fourth communication apparatus through negotiation or in another manner. This is not limited in embodiments of this application. For example, the coordinator (coordinator) broadcasts configuration information, and the configuration information includes a device address of the third communication apparatus. The configuration information further includes sequence configuration information, and the sequence configuration information includes one or more of the following: a quantity of cyclic shift positions that corresponds to the third communication apparatus, a sequence length corresponding to the third communication apparatus, or a sequence identifier corresponding to the third communication apparatus. The quantity of cyclic shift positions is used to cyclically shift the target sequence in the sequence set, the sequence length is used to determine the target sequence in the sequence set, and the sequence identifier is used to identify the target sequence in the sequence set.

The communication apparatus in this embodiment of this application determines a sequence from the sequence set, and generates the preamble sequence after cyclically shifting the sequence. Because a periodic auto-correlation side lobe amplitude of the sequence is 0, an auto-correlation characteristic of the preamble sequence is effectively ensured, so that a UWB system has relatively desirable synchronization performance. In addition, a zero cross-correlation zone may exist between preamble sequences generated through different cyclic shifts, so that interference caused by a cross-correlation side lobe between a plurality of communication apparatuses using different quantities of cyclic shift positions is relatively small, thereby improving an anti-interference capability of the UWB system.

In some embodiments of this application, in addition to the foregoing manner of generating the preamble sequence by cyclically shifting the perfect sequence, the preamble sequence may alternatively be generated in another manner.

**Embodiment 3**

Description of Embodiment 3 of this application is mainly about generating a preamble sequence by configuring a sampling interval (that is, d) and in a sampling manner using d.

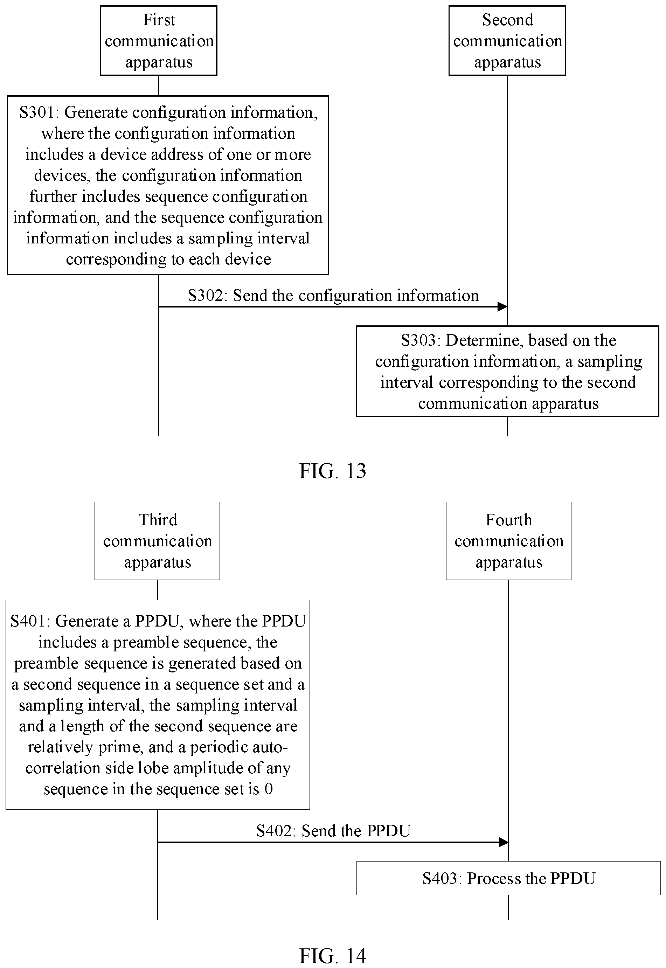

FIG. 13 is another schematic flowchart of an information interaction method according to an embodiment of this application. A first communication apparatus in the method may be a PAN coordinator in FIG. 1 or FIG. 2, and a second communication apparatus may be any device rather than the PAN coordinator in FIG. 1 or FIG. 2. As shown in FIG. 13, the information interaction method includes but is not limited to the following steps:

S301: The first communication apparatus generates configuration information. The configuration information includes a device address of one or more devices, the configuration information further includes sequence configuration information, and the sequence configuration information includes a sampling interval corresponding to each device.

S302: The first communication apparatus sends the configuration information. For example, the first communication apparatus sends the configuration information in a manner of broadcasting. For example, the configuration information may be encrypted before being sent, the sequence configuration information in the configuration information may be encrypted before being sent, or the sampling interval corresponding to each device in the configuration information may be encrypted before being sent. A specific encryption/decryption manner is not limited in embodiments of this application.

Correspondingly, one or more communication apparatuses receive the configuration information. It may be understood that a device address is used to identify a device. The device address in this embodiment of this application may be a complete address, for example, a complete MAC address, or a part of a complete address, such as first 16 bits or first 8 bits of a MAC address. An implementation of the device address is not limited in embodiments of this application. In some embodiments, the device address included in the configuration information may alternatively be replaced with a device identifier.

Optionally, the sequence configuration information includes the sampling interval corresponding to each device in the one or more devices. A sampling interval is used to perform sampling after a sequence in the sequence set is repeated sampling interval times, and the sampling interval (d) and a length (N) of the sequence (that is, a largest common divisor of d and N is 1) are relatively prime. For ease of description, in this embodiment of this application, the sampling interval is recorded as d, where d is a positive integer, that is, the sampling interval is a positive integer. The foregoing sequence configuration information may be used to determine a preamble sequence. For example, the preamble sequence may be a sampling sequence d obtained by repeating a sequence in the sequence set d times and then extracting one position every d elements. Certainly, the preamble sequence may alternatively be obtained by repeating the sampling sequence d once or more A periodic auto-correlation side lobe amplitude of any sequence in the sequence set is 0, and the periodic auto-correlation main lobe amplitude is not 0. That is, a periodic auto-correlation function $R(\tau)=0$ of any sequence in the sequence set is true for any $\tau$ not equal to 0. In other words, any sequence in the sequence set is a perfect sequence. For example, for specific content of each sequence in the sequence set in this embodiment of this application, refer to the foregoing Table 1. Details are not provided in detail herein. It may be understood that the perfect sequence usually includes at least two types of elements of 1, -1, and 0.

Optionally, sampling intervals corresponding to devices used for completing different services in the one or more devices are different. In other words, sampling intervals (in other words, values of d) corresponding to devices for performing different services are different. Sampling intervals corresponding to devices used for jointly completing one service in the one or more devices are the same. In other words, a plurality of devices may correspond to one sampling interval (in other words, a plurality of devices may correspond to a same d). Certainly, the one or more devices may be grouped into a plurality of device groups, and devices in each device group are used for jointly completing one service. One device group may correspond to one sampling interval (in other words, a value of d), and a plurality of sampling intervals corresponding to a plurality of device groups may be mutually different.

It may be understood that perfect sequences corresponding to the devices used for completing different services in the one or more devices may be the same or different. This is not limited in embodiments of this application.

Optionally, during actual application, when a plurality of devices used for jointly completing one service sample a same sequence, sampling intervals may be different; and when a plurality of devices used for jointly completing one service sample different sequences, sampling intervals may be the same or different.

Optionally, the sequence configuration information further includes a sequence length corresponding to each device, and the sequence length is used to determine a sequence for sampling in the sequence set. For example, there is only one sequence with a same length in the sequence set. Therefore, a sequence may be uniquely identified by using a sequence length. A sampling interval d corresponding to a device and a sequence length N corresponding to the device are relatively prime.

Optionally, the sequence configuration information further includes a sequence identifier corresponding to each device, and the sequence identifier is used to identify a sequence in the sequence set. For example, sequence identifiers corresponding to the devices used for jointly completing one service in the one or more devices are the same, and sequence identifiers corresponding to the devices used for completing different services in the one or more devices are different. A sampling interval d corresponding to a device and a length N of a sequence identified by a sequence identifier corresponding to the device are relatively prime.

S303: The second communication apparatus determines, based on the configuration information, a sampling interval corresponding to the second communication apparatus.

Optionally, after receiving the configuration information broadcast by the first communication apparatus, one or more communication apparatuses may determine sampling intervals d corresponding to the one or more communication apparatuses. For ease of description, the following descriptions are provided by using an example in which the second communication apparatus receives the configuration information.

After receiving the configuration information, the second communication apparatus searches, based on the device address of the one or more devices included in the configuration information, the sequence configuration information included in the configuration information for a sampling interval that corresponds to a device matching a device address of the second communication apparatus. For ease of description, the sampling interval corresponding to the second communication apparatus in the sequence configuration information is recorded as a first sampling interval $d_1$. The second communication apparatus may then determine, from the sequence set, a second sequence to be sampled by the second communication apparatus, repeat the second sequence first sampling interval $d_1$ times to obtain a first sequence, and then extract one position from the first sequence every first sampling interval $d_1$ elements to form a preamble sequence. It may be understood that the first sampling interval $d_1$ and a length of the second sequence are relatively prime. The second communication apparatus sends a PPDU, and the PPDU includes the preamble sequence. Optionally, the preamble sequence may be carried in a synchronization (SYNC) field of the PPDU. For a specific carrying manner, refer to FIG. 4 above. This is not described herein. In this embodiment of this application, a frame structure of the PPDU may include only the synchronization (SYNC) field, and may optionally include a start-frame-delimiter (SFD) field. The frame structure of the PPDU in this embodiment of this application may alternatively be any frame structure shown in FIG. 3. This is not limited in embodiments of this application.

Optionally, a manner of determining the foregoing second sequence includes but is not limited to the following three. In a first possible implementation, the second communication apparatus negotiates with another party interacting with the second communication apparatus (or performing a same service with the second communication apparatus) to determine which sequence in the sequence set is a sequence to be sampled. For ease of description, the sequence determined through negotiation is recorded as the second sequence. In a second possible implementation, the sequence configuration information further includes the sequence length corresponding to each device. After receiving the sequence configuration information, the second communication apparatus may determine a sequence length corresponding to the second communication apparatus, and search, as the second sequence based on the sequence length corresponding to the second communication apparatus, the sequence set for a sequence equal to the sequence length. In the implementation, there is only one sequence with a same length in the sequence set. In a third implementation, the sequence configuration information further includes the sequence identifier corresponding to each device. After receiving the sequence configuration information, the second communication apparatus may determine a sequence identifier corresponding to the second communication apparatus. A sequence identified by the sequence identifier in the sequence set is the second sequence.

In this embodiment of this application, the preamble sequence is generated by sampling the perfect sequence. A sampling sequence d formed by repeating the perfect sequence d times and then extracting one position every d elements (the sampling sequence d is the preamble sequence in this embodiment of this application) is still the perfect sequence. Therefore, an auto-correlation characteristic of the preamble sequence is effectively ensured, so that a UWB system has relatively desirable synchronization performance.

In addition, there are two security problems in a UWB sensing scenario. One security problem is that a channel impulse response (channel impulsive response, CIR) feedback from a receive end to a transmit end is eavesdropped by an illegal user, resulting in leakage of user privacy. The other security problem is that a preamble sequence used for sensing may be received and processed by any device, and by listening to a preamble from a valid transmitter and measuring a CIR, an unauthorized user can also detect whether a target (target) exists and a specific location of the target, to analyze a target habit and steal user privacy. The first security problem may be resolved by encrypting the CIR. However, the preamble sequence cannot be encrypted, and once the preamble sequence is encrypted, the preamble sequence no longer has original auto-correlation and cross-correlation characteristics. That is, if the preamble sequence is a perfect sequence and there is a zero auto-correlation zone, after the preamble sequence is encrypted, an encrypted sequence may not necessarily be a perfect sequence and a zero auto-correlation zone may not necessarily exist. Therefore, the second security problem cannot be resolved through encryption.

However, in this embodiment of this application, the coordinator configures the sampling interval (the configuration information may be encrypted to prevent being learned by the unauthorized user), and samples the perfect sequence by using the configured sampling interval to generate the preamble sequence, so that the unauthorized user cannot measure the CIR, thereby improving security in a UWB sensing process. This is because even if the unauthorized user learns the perfect sequence, the unauthorized user cannot learn the sampling interval. Therefore, the unauthorized user listens to and obtains a preamble and cannot obtain a main lobe by correlating the preamble to the learned perfect sequence, that is, cannot measure the CIR.

**Embodiment 4**

Description of Embodiment 4 of this application is mainly about a method for generating a new preamble sequence by sampling a perfect sequence.

Optionally, Embodiment 4 of this application may be implemented in combination with Embodiment 3, or may be implemented separately. This is not limited in this application. When Embodiment 4 of this application is implemented in combination with Embodiment 3, Embodiment 3 is executed before Embodiment 4 of this application. For specific content, refer to the following descriptions.

FIG. 14 is another schematic flowchart of a UWB-based PPDU transmission method according to an embodiment of this application. A third communication apparatus and a fourth communication apparatus in the method may be any two devices that may perform data transmission in FIG. 1 or FIG. 2. As shown in FIG. 14, the UWB-based PPDU transmission method includes but is not limited to the following steps:

S401: The third communication apparatus generates a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0.

S402: The third communication apparatus sends the PPDU.

Correspondingly, the fourth communication apparatus receives the PPDU.

S403: The fourth communication apparatus processes the PPDU.

Optionally, the preamble sequence may be carried in a synchronization (SYNC) field of the PPDU. For a specific carrying manner, refer to FIG. 4 above. This is not described herein. In this embodiment of this application, a frame structure of the PPDU may include only the synchronization (SYNC) field, and may optionally include a start-frame-delimiter (SFD) field. The frame structure of the PPDU in this embodiment of this application may alternatively be any frame structure shown in FIG. 3. This is not limited in embodiments of this application.

Optionally, the preamble sequence is obtained by extracting one position from a first sequence every sampling interval d elements, and the first sequence is obtained after the second sequence in the sequence set is repeated sampling interval d times. The sampling interval d and a length N of the second sequence are relatively prime. The periodic auto-correlation side lobe amplitude of any sequence in the foregoing sequence set is 0, and a periodic auto-correlation main lobe amplitude is not 0. In other words, any sequence in the sequence set is a perfect sequence. For example, the sequence set in this embodiment of this application may include some or all of the sequences in the foregoing Table 1.

In other words, the third communication apparatus may extract, every d elements, one position from a sequence obtained after the perfect sequence is repeated d times, to form a sampling sequence d of the perfect sequence. The sampling sequence d is the preamble sequence. A length of the perfect sequence is N, and the sampling interval d meets that d and N are relatively prime (in other words, a largest common divisor of d and N is 1). By selecting different d, different preamble sequences may be generated.

In a possible implementation, at least one of the second sequence and the sampling interval d may be determined by the third communication apparatus and the fourth communication apparatus through negotiation. An unnegotiated part of the second sequence and the sampling interval d may be determined through configuration by a coordinator or in another manner. This is not limited in embodiments of this application. For example, a negotiation process may be encrypted. A specific encryption/decryption manner is not limited in embodiments of this application. For example, there are two manners of negotiating about the second sequence. In one example, the third communication apparatus and the fourth communication apparatus may determine the second sequence by negotiating about a sequence index, repeat the second sequence sampling interval d times, and then extract one position every sampling interval d elements to generate the preamble sequence. In the other example, if there is only one sequence with a same length in the sequence set, the third communication apparatus and the fourth communication apparatus may further determine the second sequence by negotiating about a sequence length, repeat the second sequence sampling interval d times, and then extract one position every sampling interval d elements to generate the preamble sequence. The negotiation process may be encrypted. A specific encryption/decryption manner is not limited in embodiments of this application.

In another possible implementation, the second sequence may be configured by the PAN coordinator (coordinator) shown in FIG. 1 or FIG. 2 to the third communication apparatus and the fourth communication apparatus. For a specific configuration manner, refer to the related descriptions in Embodiment 3. This is not described herein. An unconfigured part of the second sequence and the sampling interval d may be determined by the third communication apparatus and the fourth communication apparatus through negotiation or in another manner. This is not limited in embodiments of this application. For example, the coordinator (coordinator) broadcasts configuration information, and the configuration information includes a device address of the third communication apparatus. The configuration information further includes sequence configuration information, and the sequence configuration information includes one or more of the following: a sampling interval corresponding to the third communication apparatus, a sequence length corresponding to the third communication apparatus, or a sequence identifier corresponding to the third communication apparatus. The sampling interval is used to perform sampling after the second sequence in the sequence set is repeated sampling interval d times, the sequence length is used to determine the second sequence for sampling in the sequence set, and the sequence identifier is used to identify the second sequence in the sequence set. The configuration information may also be encrypted. A specific encryption/decryption manner is not limited in embodiments of this application.

The communication apparatus in this embodiment of this application determines a perfect sequence from the sequence set, and samples the perfect sequence to generate the preamble sequence. A sampling sequence d formed by repeating the perfect sequence d times and then extracting one position every d elements (the sampling sequence d is the preamble sequence in this embodiment of this application) is still the perfect sequence. Therefore, an auto-correlation characteristic of the preamble sequence is effectively ensured, so that a UWB system has relatively desirable synchronization performance.

In addition, in a UWB sensing scenario, in this embodiment of this application, a transmitter and a receiver negotiate about the sampling interval (a negotiation process may be encrypted to prevent being learned by an unauthorized user), and the perfect sequence is sampled by using the sampling interval obtained through negotiation, to generate the preamble sequence, so that the unauthorized user cannot measure a CIR, thereby improving security in a UWB sensing process. This is because even if the unauthorized user learns the perfect sequence, the unauthorized user cannot learn the sampling interval. Therefore, the unauthorized user listens to and obtains a preamble and cannot obtain a main lobe by auto-correlating the preamble to the learned perfect sequence, that is, cannot measure the CIR.

In an optional embodiment, the perfect sequence may be reversed or inverted to generate the preamble sequence. The preamble sequence is obtained by reversing the perfect sequence, that is, an $n^{th}$ element of the perfect sequence becomes an $((N-n) \bmod N)^{th}$ element. The preamble sequence is obtained by inverting the perfect sequence, that is, an element 1 in the sequence becomes an element -1, and an element -1 becomes an element 1.

In a possible implementation procedure, the coordinator may broadcast configuration information, the configuration information includes a device address of one or more devices, and the configuration information further includes sequence configuration information, the sequence configuration information is used to indicate whether each device performs reversion or inversion. Correspondingly, after receiving the configuration information, one or more communication apparatuses may process (for example, reverse or invert) their respective perfect sequences based on indications of the sequence configuration information, to generate their respective preamble sequences, and send PPDUs including the preamble sequences. For example, the perfect sequence in this embodiment of this application may be all or some of the sequences shown in Table 1 above. In another possible implementation procedure, the transmitter and the receiver may negotiate whether to perform reversion or inversion, and negotiate about a perfect sequence used for the reversion or inversion. The transmitter and the receiver may generate a preamble sequence based on a negotiation result, and exchange a PPDU including the preamble sequence. For example, the perfect sequence in this embodiment of this application may be all or some of the sequences shown in Table 1 above.

In this embodiment of this application, the perfect sequence is revered or inverted to generate the preamble sequence. A sequence obtained after the perfect sequence is reversed or inverted is still the perfect sequence. Therefore, an auto-correlation characteristic of the preamble sequence is effectively ensured, so that a UWB system has relatively desirable synchronization performance. In addition, in this embodiment of this application, in the manner of reversing the perfect sequence to generate the preamble sequence, the unauthorized user further cannot measure the CIR, thereby improving security in a UWB sensing process.

The foregoing content describes the method provided in this application in detail. To facilitate implementation of the foregoing solutions of embodiments of this application, an embodiment of this application further provides a corresponding apparatus or device.

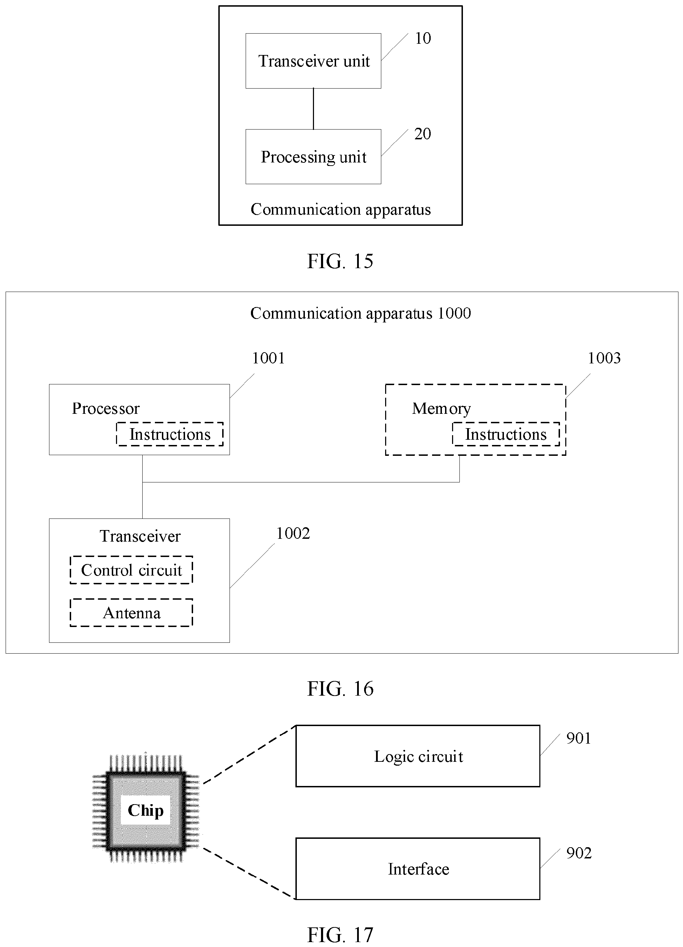

In this application, the communication apparatus is divided into functional modules according to foregoing method embodiments. For example, each functional module may be correspondingly obtained through division based on each function, or two or more functions may be integrated into one processing module. The module obtained through integration may be implemented in a form of hardware, or may be implemented in a form of a software functional module. It should be noted that the module division in this application is an example, and is merely logical function division and may be other division in actual implementation. The communication apparatus in embodiments of this application is described below in detail with reference to FIG. 15 to FIG. 17. FIG. 15 is a diagram of a structure of a communication apparatus according to an embodiment of this application. As shown in FIG. 15, the communication apparatus includes a transceiver unit 10 and a processing unit 20.

In some embodiments of this application, the communication apparatus may be the first communication apparatus described above or a chip therein. That is, the communication apparatus shown in FIG. 15 may be configured to perform the steps, the functions, or the like performed by the first communication apparatus in the foregoing method embodiment.

In a design, the processing unit 20 is configured to generate configuration information. The configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The transceiver unit 10 is configured to send the configuration information.

For specific descriptions of the configuration information, refer to Embodiment 1 of the method described above. Details are not provided one by one herein again.

It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to perform step S102 shown in FIG. 8; and the processing unit 20 may be configured to perform step S101 shown in FIG. 8.

In another design, the processing unit 20 is configured to generate configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different. The transceiver unit 10 is configured to send the configuration information.

For specific descriptions of the configuration information, refer to Embodiment 3 of the method described above. Details are not provided one by one herein again.

It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to perform step S302 shown in FIG. 13; and the processing unit 20 may be configured to perform step S301 shown in FIG. 13.

As shown in FIG. 15 again, in some other embodiments of this application, the communication apparatus may be the second communication apparatus described above or a chip therein. That is, the communication apparatus shown in FIG. 15 may be configured to perform the steps, the functions, or the like performed by the second communication apparatus in the foregoing method embodiment.

In a design, the transceiver unit 10 is configured to receive configuration information. The configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The processing unit 20 is configured to determine, based on the configuration information, a quantity of cyclic shift positions that corresponds to the communication apparatus.

In a possible implementation, the transceiver unit 10 is further configured to send a PPDU, where the PPDU includes a preamble sequence, and the preamble sequence is obtained after a target sequence in the sequence set is cyclically shifted by a quantity of cyclic shift positions equal to the quantity of cyclic shift positions that corresponds to the communication apparatus.

For specific descriptions of the configuration information, the PPDU, and the like, refer to Embodiment 1 of the method described above. Details are not provided one by one herein again. It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to: receive the configuration information and send the PPDU; and the processing unit 20 may be configured to perform step S103 shown in FIG. 8.

In another design, the transceiver unit 10 is configured to receive configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different. The processing unit 20 is configured to determine, based on the configuration information, a sampling interval corresponding to the communication apparatus.

In a possible implementation, the transceiver unit 10 is further configured to send a PPDU. The PPDU includes a preamble sequence, the preamble sequence is obtained by extracting one position from a first sequence every first sampling interval elements, the first sequence is obtained after a second sequence in the sequence set is repeated first sampling interval times, a first sampling interval is the sampling interval corresponding to the second communication apparatus, and the first sampling interval and a length of the second sequence are relatively prime.

For specific descriptions of the configuration information, the PPDU, and the like, refer to Embodiment 3 of the method described above. Details are not provided one by one herein again. It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to: receive the configuration information and send the PPDU; and the processing unit 20 may be configured to perform step S303 shown in FIG. 13.

As shown in FIG. 15 again, in still other embodiments of this application, the communication apparatus may be the third communication apparatus described above or a chip therein. That is, the communication apparatus shown in FIG. 15 may be configured to perform the steps, the functions, or the like performed by the third communication apparatus in the foregoing method embodiment.

In a design, the processing unit 20 is configured to generate a PPDU. The PPDU includes a preamble sequence, the preamble sequence is generated after a target sequence in a sequence set is cyclically shifted, and a periodic auto-correlation side lobe amplitude of any sequence in the sequence set is 0. The transceiver unit 10 is configured to send the PPDU.

In a possible implementation, the transceiver unit 10 is further configured to receive configuration information.

For specific descriptions of the PPDU, the preamble sequence, the sequence set, the configuration information, and the like, refer to Embodiment 2 of the method described above. Details are not provided one by one herein again.

It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to perform step S202 shown in FIG. 12; and the processing unit 20 may be configured to perform step S201 shown in FIG. 12.

In another design, the processing unit 20 is configured to generate a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The transceiver unit 10 is configured to send the PPDU.

In a possible implementation, the transceiver unit 10 is further configured to receive configuration information.

For specific descriptions of the PPDU, the preamble sequence, the sequence set, the configuration information, and the like, refer to Embodiment 4 of the method described above. Details are not provided one by one herein again.

It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to perform step S402 shown in FIG. 14; and the processing unit 20 may be configured to perform step S401 shown in FIG. 14.

As shown in FIG. 15 again, in yet other embodiments of this application, the communication apparatus may be the fourth communication apparatus described above or a chip therein. That is, the communication apparatus shown in FIG. 15 may be configured to perform the steps, the functions, or the like performed by the fourth communication apparatus in the foregoing method embodiment.

In a design, the transceiver unit 10 is configured to receive a PPDU. The PPDU includes a preamble sequence, the preamble sequence is generated after a target sequence in a sequence set is cyclically shifted, and a periodic auto-correlation side lobe amplitude of any sequence in the sequence set is 0. The processing unit 20 is configured to process the PPDU.

For specific descriptions of the PPDU, the preamble sequence, the sequence set, and the like, refer to Embodiment 2 of the method described above. Details are not provided one by one herein again. It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to receive the PPDU; and the processing unit 20 may be configured to perform step S203 shown in FIG. 12.

In another design, the transceiver unit 10 is configured to receive a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The processing unit 20 is configured to process the PPDU.

For specific descriptions of the PPDU, the preamble sequence, the sequence set, and the like, refer to Embodiment 4 of the method described above. Details are not provided one by one herein again. It should be understood that the specific descriptions of the transceiver unit and the processing unit described in this embodiment of this application are only examples. For the specific functions, the performed steps, or the like of the transceiver unit and the processing unit, refer to the foregoing method embodiment. Details are not provided in detail herein again. For example, the transceiver unit 10 may be configured to receive the PPDU; and the processing unit 20 may be configured to perform step S403 shown in FIG. 14.

The communication apparatus in embodiments of this application is described above, and possible product forms of the communication apparatus are described below. It should be understood that a product in any form having the function of the communication apparatus shown in FIG. 15 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 15, the processing unit 20 may be one or more processors, the transceiver unit 10 may be a transceiver, or the transceiver unit 10 may be a sending unit and a receiving unit, the sending unit may be a transmitter, the receiving unit may be a receiver, and the sending unit and the receiving unit are integrated into one device, for example, a transceiver. In embodiments of this application, the processor and the transceiver may be coupled, and the like, and a manner of connecting the processor and the transceiver is not limited in embodiments of this application. In a process of performing the foregoing method, the process of sending information (for example, sending the PPDU or the configuration information) in the foregoing method may be understood as a process of the processor outputting the foregoing information. When outputting the foregoing information, the processor outputs the foregoing information to the transceiver, so that the transceiver can transmit the foregoing information. After the foregoing information is output by the processor, the information may need to undergo other processing before reaching the transceiver. Similarly, the process of receiving information (for example, receiving the PPDU or the configuration information) in the foregoing method may be understood as a process of the processor receiving the information that is input above. When the processor receives the information that is input, the transceiver receives the information and inputs the information into the processor. Further, after the transceiver receives the foregoing information, the foregoing information may need to undergo other processing before the information is input into the processor.

FIG. 16 is a diagram of a structure of a communication apparatus 1000 according to an embodiment of this application. The communication apparatus 1000 may be a first communication apparatus, a second communication apparatus, a third communication apparatus, or a fourth communication apparatus, or a chip therein. FIG. 16 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal and process the radio frequency signal. An antenna is mainly configured to: send and receive a radio frequency signal in a form of an electromagnetic wave. The input/output apparatus such as a touchscreen, a display screen, or a keyboard is mainly configured to: receive data that is input by a user and output data to the user.

When the communication apparatus is turned on, the processor 1001 may read the software program in the memory 1003, interpret and execute instructions of the software program, and process the data of the software program. When the data needs to be sent wirelessly, the processor 1001 outputs a baseband signal to a radio frequency circuit after performing baseband processing on the data to be sent. The radio frequency circuit sends a radio frequency signal outward in a form of an electromagnetic wave through the antenna after performing radio frequency processing on the baseband signal. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independently of the processor that performs baseband processing. For example, in a distributed scenario, the radio frequency circuit and the antenna may be arranged independently of the communication apparatus in a remote manner.

The processor 1001, the transceiver 1002, and the memory 1003 may be connected through a communication bus.

In a design, the communication apparatus 1000 may be configured to execute the functions of the first communication apparatus in Embodiment 1: The processor 1001 may be configured to perform step S101 in FIG. 8, and/or another process for performing the technology described in this specification. The transceiver 1002 may be configured to perform step S102 in FIG. 8, and/or another process for performing the technology described in this specification.

In another design, the communication apparatus 1000 may be configured to execute the functions of the second communication apparatus in Embodiment 1: The processor 1001 may be configured to perform step S103 in FIG. 8, and/or another process for performing the technology described in this specification. The transceiver 1002 may be configured to receive the configuration information in FIG. 8, and/or another process for performing the technology described in this specification.

In a design, the communication apparatus 1000 may be configured to execute the functions of the third communication apparatus in Embodiment 2: The processor 1001 may be configured to perform step S201 in FIG. 12, and/or another process for performing the technology described in this specification. The transceiver 1002 may be configured to perform step S202 in FIG. 12, and/or another process for performing the technology described in this specification.

In another design, the communication apparatus 1000 may be configured to execute the functions of the fourth communication apparatus in Embodiment 2: The processor 1001 may be configured to perform step S203 in FIG. 12, and/or another process for performing the technology described in this specification. The transceiver 1002 may be configured to receive the PPDU processed in step S203 in FIG. 12, and/or another process for performing the technology described in this specification.

In a design, the communication apparatus 1000 may be configured to execute the functions of the first communication apparatus in Embodiment 3: The processor 1001 may be configured to perform step S301 in FIG. 13, and/or another process for performing the technology described in this specification. The transceiver 1002 may be configured to perform step S302 in FIG. 13, and/or another process for performing the technology described in this specification.

In another design, the communication apparatus 1000 may be configured to execute the functions of the second communication apparatus in Embodiment 3: The processor 1001 may be configured to perform step S303 in FIG. 13, and/or another process for performing the technology described in this specification. The transceiver 1002 may be configured to receive the configuration information in FIG. 13, and/or another process for performing the technology described in this specification.

In a design, the communication apparatus 1000 may be configured to execute the functions of the third communication apparatus in Embodiment 4: The processor 1001 may be configured to perform step S401 in FIG. 14, and/or another process for performing the technology described in this specification. The transceiver 1002 may be configured to perform step S402 in FIG. 14, and/or another process for performing the technology described in this specification.

In another design, the communication apparatus 1000 may be configured to execute the functions of the fourth communication apparatus in Embodiment 4: The processor 1001 may be configured to perform step S403 in FIG. 14, and/or another process for performing the technology described in this specification. The transceiver 1002 may be configured to receive the PPDU processed in step S403 in FIG. 14, and/or another process for performing the technology described in this specification.

In any one of the foregoing designs, the processor 1001 may include a transceiver for implementing receiving and sending functions. For example, the transceiver may be a transceiver circuit, an interface, or an interface circuit. The transceiver circuit, the interface, or the interface circuit for implementing the receiving and sending functions may be separate or integrated together. The foregoing transceiver circuit, the interface, or the interface circuit may be configured to read and write code/data, or the foregoing transceiver circuit, the interface, or the interface circuit may be configured to transmit or transfer a signal.

In any one of the foregoing designs, the processor 1001 may store instructions, and the instructions may be a computer program. The computer program is run by the processor 1001, to enable the communication apparatus 1000 to perform the method described in the foregoing method embodiment. The computer program may be built in the processor 1001. In this case, the processor 1001 may be implemented by hardware.

In an implementation, the communication apparatus 1000 may include a circuit, and the circuit may implement the functions of sending, receiving, or communication in the foregoing method embodiment. The processor and the transceiver described in this application can be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, such as a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited to FIG. 16. The communication apparatus may be an independent device or may be part of a relatively large device. For example, the communication apparatus may be:

(1) an independent integrated circuit IC, a chip, or a chip system or subsystem;
(2) a collection of one or more ICs, where optionally, the IC collection may alternatively include a storage component for storing data or a computer program;
(3) an ASIC, for example, a modem (Modem);
(4) a module that can be built in another device;
(5) a receiver, a terminal, an intelligent terminal, a cellular phone, a wireless device, a handheld device, a mobile unit, a vehicle-mounted device, a network device, a cloud device, an artificial intelligence device, or the like;
(6) and the like.

In another possible implementation, in the communication apparatus shown in FIG. 15, the processing unit 20 may be one or more logic circuits, and the transceiver unit 10 may be an input/output interface, a communication interface, an interface circuit, an interface, or the like. Alternatively, the transceiver unit 10 may be a sending unit and a receiving unit, the sending unit may be an output interface, the receiving unit may be an input interface, and the sending unit and the receiving unit are integrated into one unit, for example, an input/output interface. FIG. 17 is a diagram of another structure of a communication apparatus according to an embodiment of this application. As shown in FIG. 17, the communication apparatus shown in FIG. 17 includes a logic circuit 901 and an interface 902. That is, the processing unit 20 may be implemented by the logic circuit 901, and the transceiver unit 10 may be implemented by the interface 902. The logic circuit 901 may be a chip, a processing circuit, an integrated circuit, a system on chip (system on chip, SoC) chip, or the like, and the interface 902 may be a communication interface, an input/output interface, a pin, or the like. For example, FIG. 17 is shown by using an example in which the communication apparatus is a chip, and the chip includes a logic circuit 901 and an interface 902. It may be understood that, the chip shown in this embodiment of this application may include a narrowband chip, an ultra-wideband chip, or the like. This is not limited in embodiments of this application. The narrowband chip and the ultra-wideband chip may alternatively be integrated on one apparatus or chip, or may be independent of each other. An implementation of the narrowband chip and the ultra-wideband chip in the device is not limited in embodiments of this application. For example, the steps of sending the PPDU and sending the configuration information described above may be performed by the ultra-wideband chip. Whether the remaining steps are performed by the ultra-wideband chip is not limited in embodiments of this application.

In this embodiment of this application, the logic circuit and the interface may be coupled to each other. A specific manner of connecting the logic circuit and the interface is not limited in embodiments of this application.

For example, when the communication apparatus is configured to perform the method, functions, or steps performed by the first communication apparatus in Embodiment 1, the logic circuit 901 is configured to generate configuration information. The configuration information includes a device address of one or more devices, the configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The interface 902 is configured to output the configuration information.

For example, when the communication apparatus is configured to perform the method, functions, or steps performed by the second communication apparatus in Embodiment 1, the interface 902 is configured to input configuration information. The configuration information further includes sequence configuration information, the sequence configuration information includes a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different. The logic circuit 901 is configured to determine, based on the configuration information, a quantity of cyclic shift positions that corresponds to the second communication apparatus.

It may be understood that, for specific descriptions of the configuration information, the sequence configuration information, the sequence set, and the like, reference may be made to the method embodiment described above. Details are not provided one by one herein again.

For example, when the communication apparatus is configured to perform the method, functions, or steps performed by the third communication apparatus in Embodiment 2, the logic circuit 901 is configured to generate a PPDU. The PPDU includes a preamble sequence, the preamble sequence is generated after a target sequence in a sequence set is cyclically shifted, and a periodic auto-correlation side lobe amplitude of any sequence in the sequence set is 0. The interface 902 is configured to output the PPDU.

For example, when the communication apparatus is configured to perform the method, functions, or steps performed by the fourth communication apparatus in Embodiment 2, the interface 902 is configured to input a PPDU. The PPDU includes a preamble sequence, the PPDU includes a preamble sequence, the preamble sequence is generated after a target sequence in a sequence set is cyclically shifted, and a periodic auto-correlation side lobe amplitude of any sequence in the sequence set is 0. The logic circuit 901 is configured to process the PPDU.

It may be understood that, for specific descriptions of the PPDU, the preamble sequence, the sequence set, and the like, reference may be made to the method embodiment described above.

Details are not provided one by one herein again.

For example, when the communication apparatus is configured to perform the method, functions, or steps performed by the first communication apparatus in Embodiment 3, the logic circuit 901 is configured to generate configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different. The interface 902 is configured to output the configuration information.

For example, when the communication apparatus is configured to perform the method, functions, or steps performed by the second communication apparatus in Embodiment 3, the interface 902 is configured to input configuration information. The configuration information includes a device address of one or more devices, the configuration information further includes sequence configuration information, the sequence configuration information includes a sampling interval corresponding to each device, a sampling interval is used to perform sampling after a sequence in a sequence set is repeated sampling interval times, and the sampling interval and a length of the sequence are relatively prime. A periodic auto-correlation side lobe amplitude of any sequence in the sequence set is 0, and sampling intervals corresponding to devices used for completing different services in the one or more devices are different. The logic circuit 901 is configured to determine, based on the configuration information, a sampling interval corresponding to the second communication apparatus.

It may be understood that, for specific descriptions of the configuration information, the sequence configuration information, the sequence set, and the like, reference may be made to the method embodiment described above. Details are not provided one by one herein again.

For example, when the communication apparatus is configured to perform the method, functions, or steps performed by the third communication apparatus in Embodiment 4, the logic circuit 901 is configured to generate a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The interface 902 is configured to output the PPDU.

For example, when the communication apparatus is configured to perform the method, functions, or steps performed by the fourth communication apparatus in Embodiment 4, the interface 902 is configured to input a PPDU. The PPDU includes a preamble sequence, the preamble sequence is generated based on a second sequence in a sequence set and a sampling interval, the sampling interval and a length of the second sequence are relatively prime, and a periodic auto-correlation side lobe amplitude of any sequence in the sequence set is 0. The logic circuit 901 is configured to process the PPDU.

It may be understood that, for specific descriptions of the PPDU, the preamble sequence, the sequence set, and the like, reference may be made to the method embodiment described above. Details are not provided one by one herein again.

It may be understood that the communication apparatus described in embodiments of this application may implement the method provided in embodiments of this application in a form of hardware, in a form of software, or the like. This is not limited in embodiments of this application. For the specific implementations of embodiments shown in FIG. 17, further refer to foregoing embodiments. Details are not provided in detail herein again.

An embodiment of this application further provides a wireless communication system. The wireless communication system includes a first communication apparatus and a second communication apparatus, and the first communication apparatus and the second communication apparatus may be configured to perform the method in Embodiment 1 or Embodiment 3.

An embodiment of this application further provides a wireless communication system. The wireless communication system includes a third communication apparatus and a fourth communication apparatus, and the third communication apparatus and the fourth communication apparatus may be configured to perform the method in Embodiment 2 or Embodiment 4.

In addition, this application further provides a computer program. The computer program is configured to implement the operations and/or processing performed by the first communication apparatus in the method provided in this application.

This application further provides a computer program. The computer program is configured to implement the operations and/or processing performed by the second communication apparatus in the method provided in this application.

This application further provides a computer program. The computer program is configured to implement the operations and/or processing performed by the third communication apparatus in the method provided in this application.

This application further provides a computer program. The computer program is configured to implement the operations and/or processing performed by the fourth communication apparatus in the method provided in this application.

This application further provides a computer-readable storage medium. The computer-readable storage medium stores computer code. When the computer code is run on a computer, the computer is enabled to perform the operations and/or processing performed by the first communication apparatus in the method provided in this application.

This application further provides a computer-readable storage medium. The computer-readable storage medium stores computer code. When the computer code is run on a computer, the computer is enabled to perform the operations and/or processing performed by the second communication apparatus in the method provided in this application.

This application further provides a computer-readable storage medium. The computer-readable storage medium stores computer code. When the computer code is run on a computer, the computer is enabled to perform the operations and/or processing performed by the third communication apparatus in the method provided in this application.

This application further provides a computer-readable storage medium. The computer-readable storage medium stores computer code. When the computer code is run on a computer, the computer is enabled to perform the operations and/or processing performed by the fourth communication apparatus in the method provided in this application.

This application further provides a computer program product. The computer program product includes computer code or a computer program. When the computer code or the computer program is run on a computer, the operations and/or processing performed by the first communication apparatus in the method provided in this application are/is performed.

This application further provides a computer program product. The computer program product includes computer code or a computer program. When the computer code or the computer program is run on a computer, the operations and/or processing performed by the second communication apparatus in the method provided in this application are/is performed.

This application further provides a computer program product. The computer program product includes computer code or a computer program. When the computer code or the computer program is run on a computer, the operations and/or processing performed by the third communication apparatus in the method provided in this application are/is performed.

This application further provides a computer program product. The computer program product includes computer code or a computer program. When the computer code or the computer program is run on a computer, the operations and/or processing performed by the fourth communication apparatus in the method provided in this application are/is performed.

In several embodiments provided in this application, it should be understood that the disclosed system, apparatus, and method may be implemented in other manners. For example, described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, some or all of the technical solutions may be implemented in the form of a software product. The computer software product is stored in a readable storage medium and includes several instructions for instructing a computing device (this may be a personal computer, a server, a network device, or the like) to perform all or some of the steps of the methods described in embodiments of this application. The foregoing readable storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information interaction method, comprising:

   generating, by a communication apparatus, configuration information, wherein the configuration information comprises a device address of one or more devices, the configuration information further comprises sequence configuration information, the sequence configuration information comprises a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different; and
   sending, by the communication apparatus, the configuration information.

2. An information interaction method, comprising:

   receiving, by a communication apparatus, configuration information, wherein the configuration information comprises a device address of one or more devices, the configuration information further comprises sequence configuration information, the sequence configuration information comprises a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different; and

determining, by the communication apparatus based on the configuration information, a quantity of cyclic shift positions that corresponds to the communication apparatus.

3. The method according to claim 2, wherein after the determining, by the communication apparatus based on the configuration information, a quantity of cyclic shift positions that corresponds to the communication apparatus, the method further comprises:

sending, by the communication apparatus, a PPDU, wherein the PPDU comprises a preamble sequence, and the preamble sequence is obtained after a target sequence in the sequence set is cyclically shifted by a quantity of cyclic shift positions equal to the quantity of cyclic shift positions that corresponds to the communication apparatus.

4. The method according to any one of claims 1 to 3, wherein quantities that are of cyclic shift positions and that correspond to devices used for jointly completing one service in the one or more devices are the same.

5. The method according to any one of claims 1 to 4, wherein the one or more devices belong to M device groups, devices in each device group are used for jointly completing one service, and one device group corresponds to one quantity of cyclic shift positions, wherein M is an integer greater than or equal to 1; and

quantities that are of cyclic shift positions and that respectively correspond to the M device groups are: 0, Z, 2Z, 3Z, ..., and $(M-1) \times Z$; the one or more devices correspond to a same sequence in the sequence set, and the M quantities that are of cyclic shift positions and that correspond to the M device groups are used to cyclically shift a same sequence in the sequence set, wherein

$$Z = \lfloor N/M \rfloor,$$

wherein

N represents a length of the sequence corresponding to the one or more devices, and $\lfloor N/M \rfloor$ represents rounding down of N/M.

6. The method according to any one of claims 1 to 5, wherein the sequence configuration information further comprises a sequence length corresponding to each device, and the sequence length is used to determine a sequence for a cyclic shift in the sequence set.

7. The method according to any one of claims 1 to 6, wherein the sequence configuration information further comprises a sequence identifier corresponding to each device, the sequence identifier is used to identify a sequence in the sequence set, sequence identifiers corresponding to the devices used for jointly completing one service in the one or more devices are the same, and sequence identifiers corresponding to the devices used for completing different services in the one or more devices are different.

8. An ultra-wideband-based physical layer protocol data unit PPDU transmission method, comprising:

generating, by a communication apparatus, a physical layer protocol data unit PPDU, wherein the PPDU comprises a preamble sequence, the preamble sequence is generated after a target sequence in a sequence set is cyclically shifted, and a periodic auto-correlation side lobe amplitude of any sequence in the sequence set is 0; and

sending, by the communication apparatus, the PPDU.

9. The method according to claim 8, wherein before the generating, by a communication apparatus, a physical layer protocol data unit PPDU, the method further comprises:

receiving, by the communication apparatus, configuration information, wherein the configuration information comprises a device address of the communication apparatus, the configuration information further comprises sequence configuration information, and the sequence configuration information comprises one or more of the following: a quantity of cyclic shift positions that corresponds to the communication apparatus, a sequence length corresponding to the communication apparatus, or a sequence identifier corresponding to the communication apparatus; and

the quantity of cyclic shift positions is used to cyclically shift the target sequence in the sequence set, the sequence length is used to determine the target sequence in the sequence set, and the sequence identifier is used to identify the target sequence in the sequence set.

10. An ultra-wideband-based physical layer protocol data unit PPDU transmission method, comprising:

receiving, by a communication apparatus, a physical layer protocol data unit PPDU, wherein the PPDU comprises a preamble sequence, the preamble sequence is generated after a target sequence in a sequence set is cyclically shifted, and a periodic auto-correlation side lobe amplitude of any sequence in the sequence set is 0; and processing, by the communication apparatus, the PPDU.

11. The method according to any one of claims 8 to 10, wherein the preamble sequence is obtained after the target sequence in the sequence set is cyclically shifted, or the preamble sequence is obtained after the target sequence in the sequence set is cyclically shifted and is then repeated once or more.

12. A communication apparatus, comprising:

a processing unit, configured to generate configuration information, wherein the configuration information comprises a device address of one or more devices, the configuration information further comprises sequence configuration information, the sequence configuration information comprises a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different; and

a transceiver unit, configured to send the configuration information.

13. A communication apparatus, comprising:

a transceiver unit, configured to receive configuration information, wherein the configuration information comprises a device address of one or more devices, the configuration information further comprises sequence configuration information, the sequence configuration information comprises a quantity of cyclic shift positions that corresponds to each device, the quantity of cyclic shift positions is used to cyclically shift a sequence in a sequence set, a periodic auto-correlation side lobe amplitude of any sequence in the sequence set is 0, and quantities that are of cyclic shift positions and that correspond to devices used for completing different services in the one or more devices are different; and

a processing unit, configured to determine, based on the configuration information, a quantity of cyclic shift positions that corresponds to the communication apparatus.

14. The apparatus according to claim 13, wherein the transceiver unit is further configured to:
send a PPDU, wherein the PPDU comprises a preamble sequence, and the preamble sequence is obtained after a target sequence in the sequence set is cyclically shifted by a quantity of cyclic shift positions equal to the quantity of cyclic shift positions that corresponds to the communication apparatus.

15. The apparatus according to any one of claims 12 to 14, wherein quantities that are of cyclic shift positions and that correspond to devices used for jointly completing one service in the one or more devices are the same.

16. The apparatus according to any one of claims 12 to 15, wherein the one or more devices belong to M device groups, devices in each device group are used for jointly completing one service, and one device group corresponds to one quantity of cyclic shift positions, wherein M is an integer greater than or equal to 1; and

quantities that are of cyclic shift positions and that respectively correspond to the M device groups are: 0, Z, 2Z, 3Z, ..., and $(M-1) \times Z$; the one or more devices correspond to a same sequence in the sequence set, and the M quantities that are of cyclic shift positions and that correspond to the M device groups are used to cyclically shift a same sequence in the sequence set, wherein

$$Z = \lfloor N/M \rfloor,$$

wherein

N represents a length of the sequence corresponding to the one or more devices, and $\lfloor N/M \rfloor$ represents rounding down of N/M.

17. The apparatus according to any one of claims 12 to 16, wherein the sequence configuration information further comprises a sequence length corresponding to each device, and the sequence length is used to determine a sequence for a cyclic shift in the sequence set.

18. The apparatus according to any one of claims 12 to 17, wherein the sequence configuration information further comprises a sequence identifier corresponding to each device, the sequence identifier is used to identify a sequence in the sequence set, sequence identifiers corresponding to the devices used for jointly completing one service in the one or more devices are the same, and sequence identifiers corresponding to the devices used for completing different services in the one or more devices are different.

19. A communication apparatus, comprising:

a processing unit, configured to generate a physical layer protocol data unit PPDU, wherein the PPDU comprises a preamble sequence, the preamble sequence is generated after a target sequence in a sequence set is cyclically shifted, and a periodic auto-correlation side lobe amplitude of any sequence in the sequence set is 0; and
a transceiver unit, configured to send the PPDU.

20. The apparatus according to claim 19, wherein the transceiver unit is further configured to:

receive configuration information, wherein the configuration information comprises a device address of the communication apparatus, the configuration information further comprises sequence configuration information, and the sequence configuration information comprises one or more of the following: a quantity of cyclic shift positions that corresponds to the communication apparatus, a sequence length corresponding to the communication apparatus, or a sequence identifier corresponding to the communication apparatus; and
the quantity of cyclic shift positions is used to cyclically shift the target sequence in the sequence set, the sequence length is used to determine the target sequence in the sequence set, and the sequence identifier is used to identify the target sequence in the sequence set.

21. A communication apparatus, comprising:

a transceiver unit, configured to receive a physical layer protocol data unit PPDU, wherein the PPDU comprises a preamble sequence, the preamble sequence is generated after a target sequence in a sequence set is cyclically shifted, and a periodic auto-correlation side lobe amplitude of any sequence in the sequence set is 0; and
a processing unit, configured to process the PPDU.

22. The apparatus according to any one of claims 19 to 21, wherein the preamble sequence is obtained after the target sequence in the sequence set is cyclically shifted, or the preamble sequence is obtained after the target sequence in the sequence set is cyclically shifted and is then repeated once or more.

23. A communication apparatus, comprising a processor and a memory, wherein

the memory is configured to store instructions; and
the processor is configured to execute the instructions, so that the method according to any one of claims 1 to 11 is performed.

24. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 11 is performed.

25. A computer-readable storage medium, wherein the computer-readable storage medium is configured to store a computer program, and when the computer program is executed, the method according to any one of claims 1 to 11 is performed.

FIG. 1

FIG. 2

| SYNC | SFD | PHR | PHY payload |
|---|---|---|---|

PPDU

| SYNC | SFD | STS | PHR | PHY payload |
|---|---|---|---|---|

PPDU

| SYNC | SFD | PHR | PHY payload | STS |
|---|---|---|---|---|

PPDU

| SYNC | SFD | STS |
|---|---|---|

PPDU

SYNC: Synchronization    SFD: Start-frame-delimiter
PHR: Physical layer header
STS: Scrambled timestamp sequence
PHY payload: Physical payload
PPDU: Physical layer protocol data unit

FIG. 3

| $C_i(0)$ | $C_i(1)$ | ... | $C_i(K-1)$ |

Where K is a code
length 31, 91, or 127

| $C_i(0)$ | 0 | 0 | ... | 0 | $C_i(1)$ | 0 | 0 | ... | 0 | ... | $C_i(K-1)$ | 0 | 0 | ... | 0 |

L chips

Symbol $S_i$ of duration: $T_{psym}$

L chips: L chips
Symbol $S_i$ of duration: Duration $T_{psym}$ of the $T_{psym}$ symbol $S_i$
where K is a code length 31, 91, or 127: where K is a code length 31, 91, or 127

FIG. 4

FIG. 5

Auto-cor: Auto-correlation
Cross-corr: Cross-correlation

FIG. 6

FIG. 7

```
┌─────────────────┐                              ┌─────────────────┐
│     First       │                              │     Second      │
│  communication  │                              │  communication  │
│   apparatus     │                              │   apparatus     │
└─────────────────┘                              └─────────────────┘
         │                                                 │
┌────────┴────────────────────────────────┐                │
│ S101: Generate configuration information,│                │
│    where the configuration information   │                │
│  includes a device address of one or more│                │
│  devices, the configuration information  │                │
│  further includes sequence configuration │                │
│   information, the sequence configuration│                │
│  information includes a quantity of cyclic│               │
│   shift positions that corresponds to each│              │
│ device, the quantity of cyclic shift positions│           │
│  is used to cyclically shift a sequence in a│             │
│   sequence set, a periodic auto-correlation│             │
│  side lobe amplitude of any sequence in the│             │
│ sequence set is 0, and quantities that are of│          │
│ cyclic shift positions and that correspond to│          │
│    devices used for completing different │                │
│   services in the one or more devices are│               │
│                different                 │                │
└────────┬────────────────────────────────┘                │
         │                                                 │
         │  S102: Send the configuration information        │
         ├────────────────────────────────────────────────▶│
         │                                   ┌──────────────┴──────────────┐
         │                                   │   S103: Determine, based on the│
         │                                   │ configuration information, a quantity of│
         │                                   │ cyclic shift positions that corresponds to│
         │                                   │  the second communication apparatus│
         │                                   └──────────────┬──────────────┘
         │                                                 │
```

FIG. 8

| Preamble sequence of a first device group: | Ipatov sequence | Ipatov sequence | ... |
|---|---|---|---|

| Preamble sequence of a second device group: | The Ipatov sequence is cyclically shifted by Z positions | The Ipatov sequence is cyclically shifted by Z positions | ... |
|---|---|---|---|

| Preamble sequence of a third device group: | The Ipatov sequence is cyclically shifted by 2Z positions | The Ipatov sequence is cyclically shifted by 2Z positions | ... |
|---|---|---|---|

$\vdots$

| Preamble sequence of an $M^{th}$ device group: | The Ipatov sequence is cyclically shifted by $(M-1) \times Z$ positions | The Ipatov sequence is cyclically shifted by $(M-1) \times Z$ positions | ... |
|---|---|---|---|

FIG. 9

| Preamble sequence of a first device group: | Ipatov sequence | Ipatov sequence | ... |
|---|---|---|---|

| Preamble sequence of a second device group: | The Ipatov sequence is cyclically shifted by $\lfloor N/2 \rfloor$ positions | The Ipatov sequence is cyclically shifted by $\lfloor N/2 \rfloor$ positions | ... |
|---|---|---|---|

FIG. 10a

| Preamble sequence of a first device group: | Ipatov sequence | Ipatov sequence | ... |
|---|---|---|---|

| Preamble sequence of a second device group: | The Ipatov sequence is cyclically shifted by $\lfloor N/4 \rfloor$ positions | The Ipatov sequence is cyclically shifted by $\lfloor N/4 \rfloor$ positions | ... |
|---|---|---|---|

| Preamble sequence of a third device group: | The Ipatov sequence is cyclically shifted by $\lfloor N/2 \rfloor$ positions | The Ipatov sequence is cyclically shifted by $\lfloor N/2 \rfloor$ positions | ... |
|---|---|---|---|

| Preamble sequence of a fourth device group: | The Ipatov sequence is cyclically shifted by $\lfloor 3 \times N/4 \rfloor$ positions | The Ipatov sequence is cyclically shifted by $\lfloor 3 \times N/4 \rfloor$ positions | ... |
|---|---|---|---|

FIG. 10b

Auto-correlation and cross-correlation auto/cross correlation

70

60

50

40

30

20

10

0

-10

0    100    200    300    400    500    600    700

τ

Length of a zero cross-correlation zone

Auto-corr
Cross-corr

Auto-corr: Auto-correlation
Cross-corr: Cross-correlation

FIG. 11

Third communication apparatus

Fourth communication apparatus

S201: Generate a PPDU, where the PPDU includes a preamble sequence, the preamble sequence is generated after a target sequence in a sequence set is cyclically shifted, and a periodic auto-correlation side lobe amplitude of any sequence in the sequence set is 0

S202: Send the PPDU

S203: Process the PPDU

FIG. 12

```
┌─────────────────┐                          ┌─────────────────┐
│      First      │                          │     Second      │
│  communication  │                          │  communication  │
│    apparatus    │                          │    apparatus    │
└─────────────────┘                          └─────────────────┘
         │                                            │
┌────────┴────────────────────────────┐               │
│ S301: Generate configuration         │               │
│ information, where the configuration │               │
│ information includes a device        │               │
│ address of one or more devices, the  │               │
│ configuration information further    │               │
│ includes sequence configuration      │               │
│ information, and the sequence         │               │
│ configuration information includes a │               │
│ sampling interval corresponding to   │               │
│ each device                          │               │
└────────┬────────────────────────────┘               │
         │  S302: Send the configuration information    │
         │─────────────────────────────────────────────▶│
         │                          ┌───────────────────┴─────────┐
         │                          │ S303: Determine, based on   │
         │                          │ the configuration           │
         │                          │ information, a sampling     │
         │                          │ interval corresponding to   │
         │                          │ the second communication    │
         │                          │ apparatus                   │
         │                          └───────────────────┬─────────┘
         │                                            │
```

FIG. 13

```
┌─────────────────┐                          ┌─────────────────┐
│      Third      │                          │     Fourth      │
│  communication  │                          │  communication  │
│    apparatus    │                          │    apparatus    │
└─────────────────┘                          └─────────────────┘
         │                                            │
┌────────┴───────────────────────────┐                │
│ S401: Generate a PPDU, where the    │                │
│ PPDU includes a preamble sequence,  │                │
│ the preamble sequence is generated  │                │
│ based on a second sequence in a     │                │
│ sequence set and a sampling         │                │
│ interval, the sampling interval and │                │
│ a length of the second sequence are │                │
│ relatively prime, and a periodic    │                │
│ auto-correlation side lobe          │                │
│ amplitude of any sequence in the    │                │
│ sequence set is 0                   │                │
└────────┬───────────────────────────┘                │
         │         S402: Send the PPDU                  │
         │─────────────────────────────────────────────▶│
         │                          ┌───────────────────┴─────────┐
         │                          │ S403: Process the PPDU      │
         │                          └───────────────────┬─────────┘
         │                                            │
```

FIG. 14

10

Transceiver unit

20

Processing unit

Communication apparatus

FIG. 15

Communication apparatus 1000

1001

Processor

Instructions

1003

Memory

Instructions

Transceiver

1002

Control circuit

Antenna

FIG. 16

901

Logic circuit

Chip

902

Interface

FIG. 17

## INTERNATIONAL SEARCH REPORT

International application No.

**PCT/CN2023/096929**

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, ENTXTC, WPABSC, VEN, 3GPP: 超宽带, 前导码, 完备序列, 完美序列, 循环移位, 自相关, 旁瓣, 幅度, 物理层协议数据单元, UWB, preamble, perfect sequence, Ipatov, cyclic shift, autocorrelation, side lobe, magnitude, PPDU

**C. DOCUMENTS CONSIDERED TO BE RELEVANT**

| Category* | Citation of document, with indication, where appropriate, of the relevant passages | Relevant to claim No. |
|---|---|---|
| A | WO 2022083845 A1 (HUAWEI TECHNOLOGY CO., LTD. et al.) 28 April 2022 (2022-04-28) entire document | 1-25 |
| A | WO 2017134310 A1 (DECAWAVE LTD et al.) 10 August 2017 (2017-08-10) entire document | 1-25 |
| A | US 2021337604 A1 (HUAWEI TECHNOLOGIES CO., LTD.) 28 October 2021 (2021-10-28) entire document | 1-25 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 August 2023** | **30 August 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2023/096929**

| Patent document cited in search report | | | Publication date (day/month/year) | Patent family member(s) | | | Publication date (day/month/year) |
|---|---|---|---|---|---|---|---|
| WO | 2022083845 | A1 | 28 April 2022 | | None | | |
| WO | 2017134310 | A1 | 10 August 2017 | KR | 20230104998 | A | 11 July 2023 |
| | | | | KR | 20180111910 | A | 11 October 2018 |
| | | | | KR | 102550919 | B1 | 05 July 2023 |
| | | | | JP | 2019509668 | A | 04 April 2019 |
| | | | | JP | 7209540 | B2 | 20 January 2023 |
| | | | | EP | 3683970 | A1 | 22 July 2020 |
| | | | | EP | 3411957 | A1 | 12 December 2018 |
| US | 2021337604 | A1 | 28 October 2021 | WO | 2020143907 | A1 | 16 July 2020 |
| | | | | EP | 3895498 | A1 | 20 October 2021 |

Form PCT/ISA/210 (patent family annex) (July 2022)

**EP 4 529 066 A1**